# EUROPEAN PATENT SPECIFICATION

(11) **EP 4 452 801 B1**
(45) Date of publication and mention of the grant of the patent: **07.10.2026**
(21) Application number: 22847154.6
(22) Date of filing: 21.12.2022
(51) Int. Cl.: B65H 19/26, H01M 10/04, B65H 19/22

(54) **APPARATUS AND METHOD FOR MAKING A COIL, PREFERABLY FOR AN ELECTROCHEMICAL CELL INTENDED FOR THE PRODUCTION OF BATTERIES**
VORRICHTUNG UND VERFAHREN ZUR HERSTELLUNG EINER SPULE, VORZUGSWEISE FÜR EINE ELEKTROCHEMISCHE ZELLE ZUR HERSTELLUNG VON BATTERIEN
APPAREIL ET PROCÉDÉ DE FABRICATION D'UNE BOBINE, DE PRÉFÉRENCE POUR UNE CELLULE ÉLECTROCHIMIQUE DESTINÉE À LA PRODUCTION DE BATTERIES

(30) Priority: 21.12.2021 IT 202100032009; 21.12.2021 IT 202100032012; 21.12.2021 IT 202100032015; 22.04.2022 IT 202200008033; 22.04.2022 IT 202200008075
(43) Date of publication of application: 30.10.2024
(60) Divisional application: 24223212.2 / 4 535 475
(73) Proprietor: G.D S.p.A., 40133 Bologna (BO) (IT)
(72) Inventor: BIONDI, Andrea, 40133 BOLOGNA (IT); CAMPAGNOLI, Enrico, 40133 Bologna (BO) (IT); CAVAZZA, Luca, 40133 BOLOGNA (IT); NANNI, Fabrizio, 40133 Bologna (BO) (IT); BERTUZZI, Ivanoe, 40133 Bologna (BO) (IT)
(74) Representative: Locas, Davide
(86) International application number: PCT/IB2022/062598
(87) International publication number: WO 2023/119180

(56) References cited:
- JP-A- 2009 252 425
- US-A1- 2011 095 116

## Description

The present invention relates to an apparatus for making a coil, for example of the type formed by winding a strip-shaped article that includes a strip or a plurality of overlapping strips.

The invention is further directed to a method for making the same coil.

The present invention finds a preferred, although not exclusive, application in the field of the production of electrochemical cells, for the realization of which a winding of a strip-shaped article is used.

In particular, in the pertinent technical sector, it is known to combine conductor strips and separator strips into layers in order to form an anode and cathode structure. The article made by overlapping the aforementioned layers is then wound into a coil and is used to make the electrochemical cell itself.

An example of apparatus and of method for making batteries by winding conductor strips and separator strips is described in WO2010023525A1, US 2011/095116 A1 and JP 2009 252425 A.

In this description as well as in the accompanying claims, certain terms and expressions are deemed to have, unless otherwise expressly indicated, the meaning expressed in the following definitions.

The term "strip-shaped article" is intended to mean any solid product which, within an industrial production line, is presented in the form of an elongated strip or ribbon, i.e. an element in which the longitudinal extension is significantly greater than its transversal extension. The strip-shaped article can be formed by a single strip or ribbon of material, or by overlapping several strips arranged in layers.

The strip-shaped article also has characteristics that allow a certain bending during its advancing along a relative production line.

The strip-shaped article can for example be made by overlapping conductor and insulating layers alternated with each other and be intended to form a sandwich to be wound for making a coil intended for the production of electrochemical cells.

The term "winding" is intended to mean making a spiral structure by rotation of a strip, a ribbon or more generally a strip-shaped article around an axis, a flat surface or another structure. By winding, the strip-shaped article will form one or more turns around the axis or the structure.

The term "coil" is intended to mean any spiral structure formed by winding a strip, ribbon or more generally a strip-shaped article around an axis, a flat surface or another winding structure. Depending on the structure around which the strip-shaped article is wound, the overall shape of the coil may be substantially cylindrical rather than crushed or otherwise shaped.

As mentioned above, the coil can find application not only in the electrochemical cell sector but also in other sectors, such as for example in the conductor sector, within which coil-shaped structures can likewise be used.

The term "closed path" is intended to mean a path along which a winding head or other element travels in which the starting point and the end point of the path substantially coincide.

The term "continuous" refers to an expression of motion, which means an operation that takes place without interruption, without there being a stop or an interruption in the operation in question. In particular, with reference to the movement of a strip or of other element, the term "continuous" indicates that the strip is never stopped during its movement.

By the term "substantially constant" referred to a measure or amount, such as for example the speed of displacement of an object, it is meant that such measure or amount maintains, over time, a value which preferably varies by a maximum of ±10%, preferably by a maximum of ±5%, preferably by a maximum of ±2%.

By the term "integral" referred to the movement of two or more elements, it is meant that these elements perform substantially the same movement and substantially simultaneously. In other words, two integral elements move together, as a single body, although they are not necessarily joined or bound to each other. It can in fact be provided that the respective systems of movement of the two elements are coordinated in such a way as to move, when necessary, the two elements together. Furthermore, it may be provided for the use of a temporary constraint between the two elements which, for example, joins them to each other in some steps, causing them to move together, and separates them again, making them movable independently of each other.

It should also be noted that by the expression "to displace an object between a first position and a second position" it is meant both the displacement from the first position to the second position and the displacement from the second position to the first position.

This definition applies in an analogous way to similar expressions of motion, such as for example to transfer or to move a generic object between two positions or between two zones or even between two different operating configurations.

The Applicant, in the context of the constant need to increase the performance and the efficiency of the production processes, has preliminarily observed how, in a production line for making a coil, the feed rate of the strip-shaped article with respect to the unit that carries out the winding thereof can be an important element limiting the production capacity of the line itself.

Furthermore, this limitation is even more critical if high precision is required in the formation of the coil. In particular, the Applicant has noted that in many applications, such as for example in the production of electrochemical cells, high precision in the geometry of the windings must be ensured in order to ensure the required performance of the finished product.

This requirement entails an overall slowdown in the production line, since it is necessary to interrupt the advancement of the strip-shaped article in order to guarantee the necessary winding precision.

However, the Applicant has observed that this solution leads to the formation of states of tension on the strip-shaped article due to its stopping and/or restarting, the generation of which may compromise the production quality of the end product obtained through the coil formed by the winding of the article.

In order to increase the speed of execution of the coil, the Applicant has therefore perceived that this can be achieved by setting in motion, in addition to the strip-shaped article, also the winding heads responsible for winding the same.

The Applicant has also noted that by using more than one winding head it is possible to work simultaneously on two distinct coils and/or to have one of the winding heads perform reset actions, while the other carries out the processing.

The Applicant has therefore further perceived how it is possible to increase the winding speed of the strip-shaped article with respect to the known solutions if the movement of the strip is not interrupted during the formation of the coil.

The Applicant has finally found that by setting the winding head in motion in a direction discordant with respect to the one with which the strip-shaped article is fed, it is possible to speed up the winding operations without compromising the dimensional precision of the coil, nor creating undesired states of tension on the strip.

Thanks to these characteristics, it is possible to bring the winding head closer to the feed unit from which the strip-shaped article is supplied in specific steps for making the coil.

In this way it is possible to place the winding head in an appropriate position in order to grasp the strip-shaped article that will be wound by it.

In a first aspect thereof, therefore, the present invention is directed to an apparatus for making a coil according to claim 1.

It will be appreciated that the term "along an operative segment" will be understood in the context of the present invention to mean both the possibility that it is displaced either over the entire operative segment or over one or more portions thereof.

Thanks to these characteristics, it is possible to reduce the length of the strip-shaped article between the feed unit and the winding head by means of which the article is grasped and wound. This allows both to control and possibly keep minimum the length of the strip-shaped article that extends between the winding unit and the head during the winding of the strip, and to be able to facilitate and simplify the gripping action of the strip by the gripping device. In this way it is possible to achieve high winding speeds and in general speed up the steps of making the coil.

In a second aspect thereof, the present invention concerns a method for making a coil according to claim 9.

Also on the basis of this aspect it is possible to achieve the same advantages described in relation to the previous aspect.

In a third aspect of the present solution, it is disclosed an example concerning an apparatus for making a coil, preferably for an electrochemical cell intended for the production of batteries. The apparatus preferably comprises a feed unit configured to feed a strip-shaped article which preferably includes at least one or more strips which preferably include conductor strips and separator strips.

Preferably the apparatus further comprises a winding unit which preferably includes a plurality of winding heads.

Preferably the apparatus comprises a movement device for moving said winding heads preferably configured to displace said winding heads along a working path.

Each winding head is preferably configured to wind said strip so as to make said coil during a displacement, made by said movement device, of said winding head along an operative segment of said working path.

Thanks to these characteristics, the apparatus for making a coil can wind the strip-shaped article without the need to interrupt feeding the same as the winding head can move while the strip-shaped article is being wound.

In this way, on the one hand, the strip-shaped article can operate at higher speeds than known solutions, while guaranteeing at the same time the required quality in the structure of the coil, thanks to the possibility of controlling the tension that acts on the strip-shaped article by acting on the winding speed and on the movement of the winding heads.

In a forth aspect of the present solution, it is disclosed an example concerning a method for making a coil, preferably for an electrochemical cell intended for the production of batteries, said coil being made by winding one strip-shaped article.

The method preferably comprises providing a plurality of winding heads movable along a working path.

Further, the method preferably includes winding said strip-shaped article by said winding head during a displacement of said winding head along an operative segment of said working path.

The method according to this aspect also allows the coils to be made at a higher speed and without interruptions in the path of the strip-shaped article, thanks to the possibility of carrying out the winding while the winding head itself is running along a working path and, in particular, a specific segment thereof. The displacement of the winding head can in fact be coordinated with the feeding of the strip-shaped article to the winding heads in such a way that it is not necessary to interrupt the advancement of the strip-shaped article, or of the relative strips that possibly form it, during the process of making the coil.

In a fifth aspect of the present solution, it is disclosed an example concerning an apparatus for making a coil, preferably for an electrochemical cell intended for the production of batteries.

Preferably said apparatus comprises a feed unit configured to feed at least one strip-shaped article, preferably a plurality of strips including conductor strips and separator strips.

The apparatus preferably includes a winding unit.

Preferably, the winding unit includes a plurality of winding heads, each winding head being configured to wind said strip-shaped article around a respective winding axis so as to make said coil.

Furthermore, the winding unit preferably comprises a movement device for moving said winding heads configured to displace said winding heads along a working path.

Preferably, the winding heads are displaced according to a trajectory that includes at least one rotation around a rotation axis of said movement device, said rotation axis being different from said winding axis, and preferably a translation and/or a rotation around a further axis, different from said rotation axis and from said winding axis.

Thanks to these characteristics, it is possible to achieve, by means of special kinematic mechanisms, a cyclic movement of the rotation heads, which can be obtained by rotation around the rotation axis of the movement device, with further movement of the heads obtained by a translation and/or by further rotation movements.

In this way, it is possible to obtain, with a constructively simple solution and, as such, able to achieve high speeds, the trajectories necessary for the winding heads, in order to carry out the winding of the strip during the movement of the head itself, without this entailing states of tension or movements that are difficult to control for the strip.

It will be appreciated that the trajectory run by the winding head may include rotation and translation/rotation in sequence or a combined rototranslation movement including such rotations/translation.

In a sixth aspect of the present solution, it is disclosed an example concerning a method for making a coil, preferably for an electrochemical cell intended for the production of batteries, said coil being made by winding at least one strip-shaped article.

Said method preferably comprises providing a plurality of winding heads.

Preferably, it is envisaged winding said strip-shaped article around a winding axis by one of said winding heads.

Preferably the method comprises moving said winding heads according to a trajectory formed by at least one rotation around a rotation axis of said movement device, said rotation axis being different from said winding axis and preferably a translation and/or rotation around a further axis, different from said rotation axis and from said winding axis.

Also on the basis of this aspect it is possible to achieve the same advantages described in relation to the previous aspect.

In a seventh aspect of the present solution, it is disclosed an example concerning an apparatus for making a coil, preferably for an electrochemical cell intended for the production of batteries.

Preferably said apparatus comprises a feed unit configured to feed at least one strip-shaped article, preferably comprising one or more strips which include conductor strips and separator strips.

Preferably said feed unit comprises a movable portion that includes an outlet section through which said strip-shaped article passes through when it comes out from said feed unit.

The apparatus also preferably comprises a winding unit configured to receive said strip-shaped article from said outlet section.

The winding unit preferably includes a plurality of winding heads.

Preferably the winding unit preferably includes a movement device for moving said winding heads.

Preferably, each winding head is configured to wind said strip-shaped article so as to make said coil.

Said winding heads and said movable portion are preferably both movable.

Preferably said movement device is configured to move said winding heads along a working path in such a way as to keep a respective winding head, on which said strip-shaped article is wound, at a predetermined distance from said movable portion while said winding head is moving.

Thanks to these characteristics, it is possible to control, in the various steps of making the coil, the distance between the feed unit and the winding head, providing for the appropriate distance in order to carry out the winding, minimizing the states of tension and allowing, when necessary, the cutting of the strip-shaped article.

In an eighth aspect of the present solution, it is disclosed an example concerning a method for making a coil, preferably for an electrochemical cell intended for the production of batteries, said coil being made by winding at least one strip-shaped article.

Said method preferably comprises providing a plurality of winding heads movable along a working path.

Preferably the method envisages feeding said strip-shaped article to one of said winding heads through an outlet section of a feed unit.

Preferably, the method comprises winding said strip-shaped article by said winding head to which said strip-shaped article is fed.

Preferably, it is envisaged moving at the same time said outlet section and said winding head to which said strip-shaped article is fed, keeping them at a predetermined distance.

Also on the basis of this aspect it is possible to achieve the same advantages described in relation to the previous aspect.

In a ninth aspect of the present solution, it is disclosed an example concerning an apparatus for making a coil, preferably for an electrochemical cell intended for the production of batteries.

Preferably said apparatus comprises a feed unit configured to feed at least one strip-shaped article, preferably including one or more strips which include conductor strips and separator strips.

Said apparatus comprises a winding unit.

The winding unit preferably includes a plurality of winding heads, each winding head preferably being configured to wind said strip-shaped article so as to make said coil.

Preferably, the winding unit may comprise a movement device for moving said winding heads configured to displace said winding heads along a working path.

Preferably said plurality of winding heads comprises at least a first winding head and a second winding head.

Said movement device is preferably configured so as to vary a distance between said first winding head and said second winding head along said working path.

Thanks to these characteristics and, in particular, to the possibility of varying the distance between the two winding heads, it is possible to efficiently manage the steps of making the coil, in particular by varying the distance between the two heads between the steps in which the winding takes place and those in which the strip-shaped article is cut.

In a tenth aspect of the present solution, it is disclosed an example concerning a method for making a coil, preferably for an electrochemical cell intended for the production of batteries, said coil being made by winding at least one strip-shaped article.

Preferably said method comprises providing a plurality of winding heads movable along a working path.

Preferably said plurality of winding heads comprising at least a first winding head and a second winding head.

The method preferably comprises winding said strip-shaped article by said first winding head and/or said second winding head.

It is also preferably envisaged to vary a distance between said first winding head and said second winding head along said working path.

Also on the basis of this aspect it is possible to achieve the same advantages described in relation to the previous aspect.

In an eleventh aspect of the present solution, it is disclosed an example concerning an apparatus for making a coil, preferably for an electrochemical cell intended for the production of batteries.

Preferably said apparatus comprises a feed unit configured to feed at least one strip-shaped article, preferably comprising one or more strips which include conductor strips and separator strips.

Preferably said apparatus comprises a winding unit.

Said winding unit preferably includes a plurality of winding heads.

Preferably, the winding unit comprises a movement device for moving said winding heads configured to displace said winding heads along a working path.

Preferably, each winding head is configured to wind said strip-shaped article so as to make said coil.

Preferably said winding head is movable along said working path in such a way that said at least one strip-shaped article is subjected to a substantially constant tension during the winding of said strip-shaped article by means of a respective winding head and as a consequence of the movement of said winding head and preferably at least in a segment comprised between said feed unit and said winding head.

The term "substantially constant tension" is intended to mean that the tension remains constant with a variation comprised not higher than ±5% during the operating steps of the apparatus. Furthermore, in the context of the present invention, the constant state of tension can preferably be manifested in a constant speed of the strip-shaped article during the steps of feeding and winding the strip.

Thanks to these characteristics, it is possible to subject the strip-shaped article to a substantially constant tension, in particular while making the coil, thanks to the fact that the winding takes place while the winding head is being displaced.

Thanks to these characteristics, it is possible to subject the strip-shaped article to a substantially constant tension, in particular while making the coil, thanks to the fact that the winding takes place while the winding head is being displaced.

In this way, both the productivity of the apparatus can be increased, in terms of coils wound per unit of time, and the characteristics of the winding can be improved, which can be made in a more precise and regular manner.

According to a twelfth aspect of the present solution, it is disclosed an example concerning a method for making a coil, preferably for an electrochemical cell intended for the production of batteries, said coil being made by winding at least one strip-shaped article.

Said method preferably comprises providing a plurality of winding heads movable along a working path.

Preferably, the method envisages winding said strip-shaped article by a winding head of said plurality.

Preferably the method comprises moving said winding head by which said strip-shaped article is wound such that said strip-shaped article is subjected to a substantially constant tension.

Also on the basis of this aspect it is possible to achieve the same advantages described in relation to the previous aspect.

In a thirteenth aspect of the present solution, it is disclosed an example concerning an apparatus for making a coil, preferably for an electrochemical cell intended for the production of batteries.

Preferably said apparatus comprises a feed unit configured to feed at least one strip-shaped article preferably formed by a plurality of strips preferably including conductor strips and separator strips. The apparatus preferably comprises a winding unit.

Said winding unit preferably includes a plurality of winding heads.

Preferably, the winding unit includes a movement device for moving said winding heads which is configured to displace said winding heads along a working path.

Preferably, each winding head is configured to wind said strip-shaped article so as to make said coil.

Preferably at least one of said strips is fed continuously to said winding head by said feed unit.

Thanks to these characteristics, it is possible to make the coil without interrupting the feeding of the strip, thus avoiding interruptions in the movement of the strips that could generate unwanted states of tension or in any case decrease the productivity of the apparatus, always for the benefit of the productivity and of the quality of the product made.

In a fourteenth aspect of the present solution, it is disclosed an example concerning a method for making a coil, preferably for an electrochemical cell intended for the production of batteries, said coil being made by winding at least one strip-shaped article.

Preferably said method comprises combining a plurality of layers, preferably including conductor strips and separator strips, so as to form said strip-shaped article.

Preferably at least one of said strips is fed continuously.

The method preferably comprises providing a plurality of winding heads movable along a working path.

Preferably, it is envisaged winding said strip-shaped article by said winding head.

Also on the basis of this aspect it is possible to achieve the same advantages described in relation to the previous aspect.

In a fifteenth aspect of the present solution, it is disclosed an example concerning an apparatus for making a coil, preferably for an electrochemical cell intended for the production of batteries.

Preferably said apparatus comprises a feed unit configured to feed at least one strip-shaped article, preferably comprising one or more strips which include conductor strips and separator strips.

Said feed unit preferably comprises an outlet section through which said strip-shaped article is fed to said winding unit and, preferably, an inlet section.

Said inlet section is preferably adapted to receive said at least one strip from a respective delivery device.

The apparatus preferably comprises a winding unit.

Said winding unit preferably includes a plurality of winding heads, each winding head of said plurality being configured to wind said strip-shaped article so as to form said coil.

Preferably said winding unit comprises a movement device for moving said winding heads configured to displace said winding heads along a working path.

The apparatus preferably comprises a storage device configured so as to store a variable amount of said at least one strip-shaped article preferably between said inlet section and said outlet section. Preferably the apparatus comprises a device for actuating the storage device which actuates and preferably displaces, the storage device to vary the amount of strip stored.

Thanks to these characteristics, it is possible to envisage steps in which, while continuing to advance at least one of the strips, this is not provided, and in particular wound, to the winding heads. In this way, the cutting steps can be better managed and/or it is possible to provide for strips with different lengths in the case of a strip-shaped article formed by a plurality of overlapping layers.

It is also possible to simultaneously store all the strips which form the strip-shaped article, for example when the movement device, and hence the movable portion, move along the operative segment, and to quickly wind the strip thus stored and/or take advantage of the stored amount of strip to adjust the tension of the strip optimally.

In a sixteenth aspect of the present solution, it is disclosed an example concerning a method for making a coil, preferably for an electrochemical cell intended for the production of batteries, said coil being made by winding at least one strip-shaped article.

Preferably said method comprises providing a plurality of winding heads movable along a working path.

The method preferably envisages winding said strip-shaped article by said winding head.

Preferably, the method comprises storing a variable amount of said at least one strip-shaped article in a position upstream with respect to said winding head on which said strip-shaped article is wound, said stored amount being preferably variable during the displacement of said winding heads.

Also on the basis of this aspect it is possible to achieve the same advantages described in relation to the previous aspect.

In a seventeenth aspect of the present solution, it is disclosed an example concerning an apparatus for making a coil, preferably for an electrochemical cell intended for the production of batteries.

Preferably said apparatus comprises a feed unit configured to feed at least one strip-shaped article, preferably comprising one or more strips which include conductor strips and separator strips.

Preferably said apparatus comprises a winding unit which includes a plurality of winding heads.

Preferably, each winding head supports a gripping device that is configured to grasp a portion of said strip-shaped article.

The winding unit preferably comprises a movement device for moving said winding heads configured to displace said winding heads along a working path.

Preferably, each winding head is configured to wind said strip-shaped article so as to make said coil.

Preferably each gripping device comprises a pair of pins configured to hold said strip-shaped article between them.

Preferably at least one of said pins is movable so as to join the other pin holding said strip-shaped article between them.

Thanks to these characteristics, it is possible to grasp and block the strip-shaped article, in such a way as to wind it, in a simple way and as part of a continuous and automated process.

In an eighteenth aspect of the present solution, it is disclosed an example concerning a method for making a coil, preferably for an electrochemical cell intended for the production of batteries, said coil being made by winding at least a strip-shaped article.

Preferably said method comprises providing a plurality of winding heads movable along a working path.

The method preferably comprises grasping a portion of said strip-shaped article by said winding head.

Preferably, it is envisaged winding said strip-shaped article by said winding head.

Preferably grasping said portion of strip-shaped article comprises arranging said portion between a pair of pins, at least one of said pins being movable so as to join the other pin holding said strip-shaped article between them.

Also on the basis of this aspect it is possible to achieve the same advantages described in relation to the previous aspect.

Based on a nineteenth aspect thereof, the present invention also refers to an apparatus for making a coil, preferably for an electrochemical cell intended for the production of batteries.

Said apparatus preferably comprises a feed unit configured to feed at least one strip-shaped article formed by a plurality of strips preferably including conductor strips and separator strips.

Preferably said feed unit comprises a movable portion.

Preferably respective feed paths are defined for each of said strips.

Said feed paths preferably comprise a respective storage segment, said storage segments being substantially parallel to each other.

Preferably, the apparatus comprises a winding unit that includes at least one winding head configured to wind said strip-shaped article so as to make said coil.

Preferably said feed unit is configured in such a way as to vary, by moving said movable portion, a respective longitudinal extension of each of said storage segments. Said longitudinal extension of said storage segments is varied simultaneously, preferably for the same amount, and preferably keeping said storage segments substantially parallel to each other.

It should be noted that with the term "storage segment" referred to the strips that form the strip-shaped article, it will be indicated in the context of the present invention a portion with variable length of the path along which the strips move in which there is a sliding of the strip associated with the relative advancement. The storage segments can thus form a buffer of one or more of the strips forming the strip-shaped article.

Thanks to these characteristics, it is possible to use the displacement of the movable portion to simultaneously store the same amount of strip for each of the strips forming the strip-shaped article. In this way it is possible to use a continuous feeding of the strips while nonetheless providing for steps in which the strip-shaped article is not wound.

Based on a twentieth aspect, the present invention also relates to a method for making a coil, preferably for an electrochemical cell intended for the production of batteries. Preferably said coil is made by winding at least one strip-shaped article.

Said method preferably comprises advancing a plurality of strips along a respective feed path, said plurality of strips preferably including conductor strips and separator strips.

Preferably, it is envisaged combining said strips into layers, at the end of said feed path, in such a way as to form said strip-shaped article.

The method preferably comprises providing at least one winding head and preferably winding said strip-shaped article by said winding head.

Preferably each of said respective feed paths comprises a respective storage segment having a variable length, said storage segments being preferably substantially parallel to each other.

Preferably said method comprises simultaneously varying, preferably by the same amount, said length of each of said storage segments, preferably keeping said storage segments substantially parallel to each other during said varying said length.

Also on the basis of this aspect it is possible to achieve the same advantages described in relation to the previous aspect.

The present invention, in at least one of the aforementioned aspects, may have at least one of the further preferred features set forth below.

Preferably, each winding head supports a gripping device that is configured to grasp a portion of said strip-shaped article, said gripping devices being further preferably configured to rotate on themselves about a winding axis so as to wind said strip-shaped article.

Thanks to this characteristic, the strip-shaped article can be easily grasped so that it can then be wound by rotation of the same device that grasps it. In this way the rotation speed as well as the trajectory and the speed of the winding heads while they are winding the strip-shaped article can be easily controlled.

Preferably said feed unit defines a feed direction of said strip-shaped article.

In this way the feed unit itself defines the direction in which the strip-shaped article is fed, i.e. the direction in which it reaches the winding heads and is then grasped and wound.

If the strip-shaped article is formed by several strips, the feed direction coincides with that of the article after the strips have been combined between them.

Preferably said movement device is configured to wind said strip-shaped article during a displacement of said winding heads. Preferably said displacement of the respective winding head while it is winding is in a direction discordant with respect to said feed direction.

Thanks to this characteristic, it is possible to reduce the length of the strip-shaped article, or keep it minimal, during the winding of the strip. In this way, situations that can cause states of tension on the strip are limited and it is generally possible to achieve high winding speeds.

It should be noted that with the term "discordant" and with its opposite term "concordant" referred to two directions, it is understood that these directions are run in opposite directions, with regard to discordant, or in the same direction, with regard to concordant.

The directions do not necessarily have to be parallel and, in this case, two directions will be considered discordant when the component of one direction parallel to the second defines a path along which an object is displaced in the opposite direction with respect to the other direction.

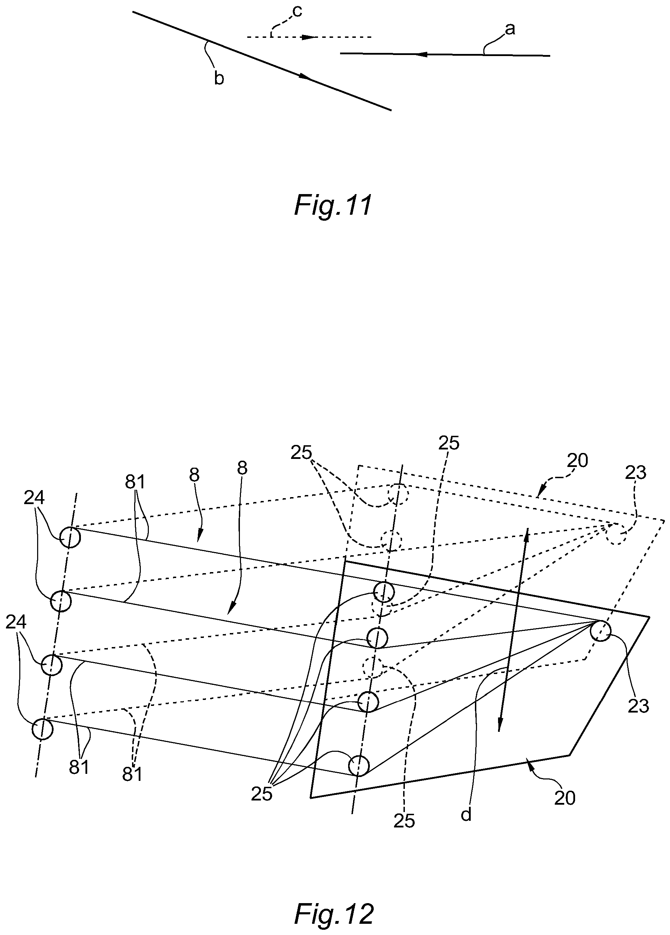

This concept is illustrated schematically in Figure 11, in which the two directions are illustrated by a continuous line and are respectively indicated with the letters a and b, while the component parallel to the second direction is illustrated by a dotted line and is indicated with the letter c. In the example depicted in the figure, the two directions are represented as discordant, as can be noted from the arrows present in the two lines.

Preferably, said displacement of the respective winding head along an operative segment is substantially parallel to said feed direction.

The term "substantially parallel", in the context of the present invention, will indicate a possible deviation by ± 10°, preferably ± 5°, with respect to a perfect parallelism.

Thanks to this characteristic, the winding head can follow the advancement movement of the strip and/or move in a direction opposite to that of the advancement of the strip in such a way as to wind it under such a condition. Each of these characteristics further contributes to making the winding of the strip and hence the formation of the coil faster and more efficient.

Preferably said feed unit comprises an outlet section through which said strip-shaped article passes through when it comes out from said feed unit and is fed to said winding unit and an inlet section preferably adapted to receive said at least one strip from a respective delivery device, a feed path of said strip being comprised between said inlet section and said outlet section.

Preferably said feed unit comprises a movable portion at which said outlet section is preferably formed.

Thanks to the presence of a movable portion in the feed unit, it is possible to change the position of the section from which the strip-shaped article exits to be supplied to the winding heads. In this way the winding heads will be able to grasp the strip-shaped article more easily, as well as it will be possible to adjust the distance between the heads and the feed unit and, consequently, the length of the strip between the head on which it is wound and the feed unit.

Preferably the apparatus comprises a cutting device configured to cut said strip-shaped article at a position downstream of said feed unit.

The presence of the cutting device downstream of the feed unit allows to make not necessary to stop the strip in the moment in which it is cut, making it possible to coordinate the cutting action with the movement of the head performed through the relative movement device.

Preferably said feed unit and said movement device are configured such that preparing for when said cutting device cuts said strip-shaped article, a respective winding head is positioned at a predetermined distance from said feed unit, said predetermined distance being preferably substantially equal to a minimum distance from said feed head.

By the term "substantially equal" referred to a minimum distance between two components it will be understood in the context of the present invention that during the different operating steps of the apparatus the two components may also be at a slightly shorter distance, however, overall, and compatibly with the kinematic mechanisms that set the two components in motion and with their overall dimensions, this distance can be considered as the minimum obtainable.

In other words, the winding heads, during their movement along the working path, may also be at a shorter distance than that at which they are located in the aforementioned cutting step, however in the context of this operation, the distance at which they are located is the minimum one at which they can be positioned to allow the approach and the use of the devices used for cutting and compatibly with the kinematic mechanisms used for the movement.

Thanks to this characteristic, it is possible to minimize the length of the part of the strip-shaped article exiting the feed unit in the moment in which the cut is made, thus simplifying management and, in particular, the winding operations on the two sections of strip-shaped article which are generated as a result of cutting.

Preferably said feed unit and said movement device are configured such that when said cutting device cuts said strip-shaped article, said respective winding head is positioned at said minimum distance from said movable portion.

Based on this characteristic, the movement of the movable portion can be advantageously exploited to achieve the positioning of the aforementioned winding head at the minimum distance. Preferably said cutting device is movable integrally with said winding head and/or with said strip-shaped article.

Preferably said movement device is configured to displace, along said working path, said winding heads according to a trajectory that includes at least:
- A rotation about a rotation axis of said movement device, said rotation axis being different from said winding axis; and
- A translation and/or a rotation around a further axis, different from said rotation axis and from said winding axis.

This characteristic makes it possible to achieve, by means of special kinematic mechanisms, a cyclic movement of the rotation heads, which can be obtained by rotation around the rotation axis of the movement device, with further movement of the heads obtained by a translation and/or by further rotation movements.

In this way, it is possible to obtain, with a constructively simple solution and, as such, able to achieve high speeds, the trajectories necessary for the winding heads, in order to carry out the winding of the strip during the movement of the head itself, without this entailing states of tension or movements that are difficult to control for the strip.

Preferably, the movement device is configured in such a way as to make said winding heads perform a combination of these movements: a translation without varying the distance between said heads and/or any movement that varies the distance between said heads.

Preferably said winding heads and said movable portion are movable in a coordinated manner, said movement device being configured to move said winding heads along said operative segment in such a way as to keep a respective winding head, on which said strip-shaped article is wound, at a predetermined distance from said movable portion while said winding head is moving.

Thanks to these characteristics, it is possible to control, in the various steps of making the coil, the distance between the feed unit and the winding head, providing for the appropriate distance in order to carry out the winding, minimizing the states of tension and allowing, when necessary, the cutting of the strip-shaped article.

Preferably said at least one strip-shaped article is subjected to a substantially constant tension, at least for a segment comprised between said feed unit and a respective winding head on which said strip-shaped article is wound.

It will be appreciated that thanks to the present invention it is possible to subject the shaped strip-shaped article to a substantially constant tension, in particular while making the coil, thanks to the fact that the winding takes place while the winding head is being displaced.

Preferably said feed unit is configured to feed said strip-shaped article at a feed speed, said winding heads being configured to wind said strip at a winding speed and being configured to displace at a displacement speed, said winding speed and said displacement speed being preferably such as to subject said strip-shaped article to said substantially constant tension.

In this way it is possible to control the tension by simply controlling the speeds on the basis of which the apparatus is made to operate, thus allowing easy control of the operating steps of the same.

Preferably said feed rate is substantially equal to the sum of said winding speed and said displacement speed.

This condition allows a substantially constant tension to be kept in the strip-shaped article, without the need for this to be stopped during winding or in general during the formation of the coil.

Preferably said strip-shaped article comprises a plurality of strips overlapped into layers, at least one of said strips being continuously fed.

Preferably said feed rate is constantly greater than zero, and preferably substantially constant, along said feed path.

These characteristics allow each of them to make the coil without interrupting the feeding of the strip, thus avoiding interruptions in the movement of the strips that could generate unwanted states of tension or in any case decrease the productivity of the apparatus.

Preferably, said feed unit comprises a coupling roller, said strips being arranged so as to converge towards said coupling roller on which said strips are partially wound in such a way that, downstream of said coupling roller, said strips are grouped to form said strip-shaped article.

Preferably, said outlet section is defined at said coupling roller.

Preferably, said coupling roller is connected to said movable portion.

Thanks to these characteristics, it is possible to group the strips in order to obtain a multilayer strip-shaped article with a solution that allows a continuous advancement of the strips. Furthermore, the position at which the strips are coupled can be advantageously modified during the different operating steps of the apparatus.

Preferably said operative segment comprises at least a first and a second portion, preferably substantially parallel to each other.

This characteristic makes it possible to obtain an operative segment that is widely extended and to use a relatively simple movement device from a construction point of view, since it is possible to use kinematic mechanisms that are not excessively complex for two substantially parallel segments to be run.

Preferably said movement device is configured to displace each winding head in a first direction along said first portion and in an opposite direction with respect to said first direction, in said second portion.

In this way, the overall dimensions of the movement device or, more generally, of the apparatus can be optimized as the winding heads can move along two substantially parallel segments in two directions opposite one another.

Preferably each gripping device is configured to wind said strip-shaped article along said first portion at a different speed than said second portion.

Thanks to the use of different winding speeds it is possible to keep a substantially constant tension on the strip-shaped article during its winding, in particular in the case where it is continuously fed. Preferably said winding head is displaced in a direction concordant to said feed direction in said first portion and in a direction discordant to said feed direction in said second portion, said winding head being preferably configured to wind said strip-shaped article at a higher speed when a respective winding head is displaced in a direction discordant to said feed direction.

Thanks to these characteristics, it is possible to optimally exploit the movement of the winding head to make the winding of the strip-shaped article as rapidly as possible, taking into account the fact that during the winding the winding head moves and, at the same time, the strip-shaped article continues to be fed.

Preferably said operative segment comprises a third portion, preferably substantially parallel to said first and/or second portions, wherein said winding head is again displaced in a direction concordant to said feed direction along said third portion.

The presence of a third portion makes it possible to further exploit the characteristics of the movement device within a cyclic solution and which, preferably, provides for the displacement of the winding heads along a closed path.

Preferably, said strip-shaped article is wound during the displacement of said movement head along said first portion and/or said second portion and/or said third portion.

Preferably, said movement device is configured to wind said strip-shaped article for an amount comprised between 5% and 15%, preferably 10%, of an overall length of strip-shaped article used for forming a single coil along said first portion.

Preferably, said movement device is configured to wind said strip-shaped article for an amount comprised between 70% and 90%, preferably 80%, of said overall length of strip-shaped article used for forming the single coil along said second portion.

Preferably, said movement device is configured to wind said strip-shaped article for an amount comprised between 5% and 15%, preferably 10%, of said overall length of strip-shaped article used for forming the single coil along said third portion.

In this way the winding takes place mainly while the winding head comes back, that is along the second portion, along which the winding can take place at a higher speed as the winding head moves in a direction discordant with respect to the feed direction.

Preferably, the apparatus comprises a storage device configured to store an amount of at least one of said plurality of strips between said inlet section and said outlet section and a device for actuating the storage device that preferably displaces said storage device to vary the stored amount of strip.

Thanks to this characteristic, it is possible to provide for steps in which, while continuing to advance at least one of the strips, this is not provided, and in particular wound, to the winding heads. In this way, the cutting steps can be better managed and/or it is possible to provide for strips of different lengths in the case of a strip-shaped article formed by a plurality of overlapping layers. Preferably said storage device comprises at least one movable element configured to vary an overall length of said feed path by moving said movable element.

Preferably said movable element is formed by said movable portion.

Preferably said movement device is configured to move integrally with said movable portion and, preferably, is rotatably supported on said movable portion.

In this way it is possible to simultaneously store all the strips which form the strip-shaped article, for example when the movement device, and hence the movable portion, move along the first portion of the operative segment, and quickly wind the strip thus stored, when it comes back to the second portion of the operative segment.

Preferably said movable element comprises at least one movable roller, said at least one strip being wound on said movable roller and on at least one fixed roller so as to vary said overall length. Preferably said movable roller and said fixed roller are configured to rotate idly.

Thanks to this characteristic, it is possible to stagger the advancement of a single strip, or of more specific strips, with respect to the remaining strips in the event that the strip-shaped article is formed by several overlapping strips, without the need to stop the advancement of the strips. In this way, by cutting at predetermined positions the strip that is stored, it is possible to obtain portions of the strip-shaped article in which one or more of the strips forming the multilayer structure is not present. This is particularly advantageous in the case of a coil for electrochemical cells, in which a terminal part of the coil in which only portions of separator strips are present is typically envisaged.

Preferably said feed unit comprises a device for holding at least one of said one or more strips which is configured to slow down or stop the feeding of at least one of said one or more strips through said outlet section.

Preferably said storage device is configured so as to store said strip when said holding device slows down or stops the feeding of said strip.

In this way the storage devices can operate when the strip is slowed down or stopped, thus avoiding that this causes tensions on the strip and allowing to continuously advance the single strip without this being fed through the outlet section of the feed unit.

Preferably said operative segment includes at least one substantially straight segment.

The presence of a straight segment along which the winding takes place is particularly advantageous in order to avoid undesirable states of tension on the strip-shaped article.

Preferably, the straight segment is substantially parallel to the feed direction, so as to further contribute to the absence of states of tension on the strip-shaped article while making the coil.

Preferably said first portion and/or said second portion and/or said third portion each form a respective straight segment.

Preferably said winding heads are configured to discharge said coil after winding, at least partially, said at least one strip, said working path comprising a reset segment along which each of said winding heads is displaced from a discharge position to a gripping position in which said winding head grasps said portion of said at least one strip-shaped article. Preferably said working path is closed.

In this way, the apparatus can operate in a cyclic manner, advantageously providing an operative segment in which the winding heads perform the winding and, in general, make the coil, and a reset part in which the heads can return to a suitable position to restart the cycle.

This is furthermore particularly advantageous in the case in which there is a straight path or, in any case, one wishes to concentrate the winding operations in a specific area, since it is sufficient to control the rotation of the heads and their behaviour with respect to the strip-shaped article in this area, simplifying the required kinematic mechanisms.

Preferably, said operative segment has a length equal to at least 5%, preferably at least 10%, preferably at least 15%, preferably at least 20% of an overall length of the working path.

Preferably, in such an operative segment the winding of the strip-shaped article takes place during the displacement of the respective winding head on which the strip-shaped article is wound.

Therefore, in other words, such displacement will cover a substantial part of the overall working path of the winding head. It will therefore be appreciated that the movement of the winding head is not limited to compensating for any differences in diameters that are caused during winding, or for minimal displacements of the strip-shaped article with respect to its movement feed direction during winding.

In this way it is possible to make the head follow the advancement of the strip-shaped article during its movement and the formation of the coil. Furthermore, this makes it possible to exploit in a suitable manner the operative segment, along which the winding head moves and winds the strip-shaped article, to coordinate in a suitable manner the operation of two or more winding heads, for example by envisaging that one head starts winding one coil, whereas another one ends winding another.

Preferably, said cutting device is configured to cut said strip-shaped article along said operative segment of said working path and, preferably, in an intermediate zone of said working path.

Thanks to this characteristic, it is possible to exploit the movement of the winding head in various steps, both for winding and for cutting and transporting the thus cut coil up to a discharge area of the same.

Preferably said plurality of winding heads comprises at least a first winding head and a second winding head, said movement device being configured so as to vary the distance between said first winding head and said second winding head along said working path.

The possibility of varying the distance between the two winding heads makes it possible to efficiently manage the steps of making the coil, in particular by varying the distance between the two heads between the steps in which the winding takes place and those in which the strip-shaped article is cut.

Preferably said movement device is configured so as to approach said first winding head to said second winding head along said working path when said cutting device cuts said strip-shaped article.

In this way it is possible to carry out the cut between the two winding heads minimizing the dimensions of the two flaps of the strip-shaped article which are generated after the cut, one head being as close as possible to the other.

Preferably said movement device is configured so as to move said first winding head away from said feed unit and being further configured so as displace said second winding head to an intermediate position between said first winding head and said feed unit along said operative segment when said first winding head is moved away.

Thanks to this characteristic, it is possible to arrange the second winding head so that it grasps the strip-shaped article while the other winding head is still winding, or in any case grasping, the strip-shaped article itself. In this way, when the second movement head grasps the strip-shaped article, this is still wound on the first winding head.

Preferably said movement device is configured in such a way that when said first winding head runs along said third portion, said second winding head, which precedes said first winding head along said working path, runs along said first portion.

This characteristic also allows to optimize the overall dimensions of the apparatus and to perform, at least in part, the winding of two coils simultaneously, in that, after cutting the strip-shaped article, the first winding head ends winding the remaining flap along the third portion and the second winding head starts winding along the first portion.

Preferably, each gripping device comprises a pair of pins configured to hold said strip-shaped article between them, at least one of said pins being movable so as to join the other pin holding said strip-shaped article between them.

The presence of the pins allows to grasp and block the strip-shaped article, in such a way as to wind it, in a simple way and as part of a continuous and automated process.

Preferably said winding axis is aligned with a longitudinal extension direction of said pins.

Preferably said at least one pin is movable along an exsegmention direction transverse, preferably perpendicular, to the feed direction of said strip-shaped article.

In this way it is possible to arrange the strip-shaped article in a sandwich configuration between the two pins during the approach of the winding head to the article itself as a single pin is approached to the strip during the movement of the head, the other being instead brought at the first pin only once it has reached the strip. Once in this position, the pins can start rotating around themselves, starting to wind and grasp the strip.

Preferably said pins are both movable, said pins being configured so as to be movable both independently of each other and in conjunction with each other, said pins being both configured so as to move along said exsegmention direction.

In this way the same pins can be advantageously used both for grasping the strip-shaped article and starting the winding thereof, and for discharging the coil once it has been made.

Preferably said displacement direction of said movable portion forms an angle with respect to the horizontal direction comprised between 30° and 60°, preferably between 40° and 50°, said angle being preferably substantially equal to 45°. In this way it is possible to obtain an optimal compromise between the overall dimensions associated with the stroke of the movable portion and the power necessary for the vertical movement of the movable portion and of all the components supported by it.

Preferably, each of said strips defines a respective feed path, said feed paths comprising a respective storage segment, said storage segments being substantially parallel to each other.

Preferably, two or more of the group formed by: at least one of said storage segments, the feed direction of the strip-shaped article, the displacement direction of the movable portion and at least one of the portions of the operative segment, are substantially parallel to each other.

Preferably, said storage segments, said feed direction of the strip-shaped article, said displacement direction of the movable portion and at least one of the portions of the operative segment, are all substantially parallel to each other.

Preferably said feed unit is configured so as to vary, preferably in a coordinated manner with said movement of said movable portion along said displacement direction, a respective longitudinal extension of each of said storage segments.

In this way it is possible to keep a constant tension even during the storage of the strips that form the strip-shaped article, without therefore the movement of the movable portion generating undesired tensions on the strips.

Preferably, said one or more storage segments extends/extend between a respective pair of diverter rollers, preferably idle. Preferably a diverter roller of said pair is supported on said movable portion.

This characteristic allows the strips to slide while they are being stored and, in particular, during the movement of the movable portion, so as not to generate undesired tensions, as previously illustrated.

Preferably said longitudinal extension of said storage segments is varied simultaneously, for the same amount, and keeping said storage segments substantially parallel to each other.

Thanks to this characteristic, it is possible to use the displacement of the movable portion to simultaneously store the same amount of strip for each of the strips forming the strip-shaped article. In this way it is possible to use a continuous feeding of the strips while nonetheless providing for steps in which the strip-shaped article is not wound.

Preferably, combining said strips into layers comprises converging said strips, downstream of said storage segments, towards an outlet section through which said strip-shaped article is provided to said winding head.

In this way, between one strip and the other, before the outlet section, a space can be defined for placing the grippers and knives that can be used to cut one or more of the strips before being combined to form the strip-shaped article.

Preferably said strip-shaped article is grasped by a gripping device, said strip-shaped article being wound by rotating said gripping device about a winding axis.

This characteristic also allows to easily grasp the strip-shaped article which can then be wound by rotating the same device that grasps it. In this way the rotation speed and the trajectory and the speed of the winding heads while they are winding the strip-shaped article can be easily controlled. Preferably it can be provided that grasping said portion of said strip-shaped article comprises feeding said strip-shaped article, said strip-shaped article being fed by displacement in a feed direction.

In this way the feed unit itself defines the direction in which the strip-shaped article is fed, i.e. the direction in which it reaches the winding heads and is then grasped and wound.

Preferably said strip-shaped article is wound during a displacement of said winding heads. Preferably said winding head is displaced in a direction discordant with respect to said feed direction when it winds said strip-shaped article.

Also thanks to this characteristic it is possible to reduce the length of the strip-shaped article, or in any case keep it minimal, during the winding of the strip. In this way, situations that can cause states of tension on the strip are limited and it is generally possible to achieve high winding speeds. In preferred embodiments it may be envisaged feeding said strip-shaped article to said winding head, said strip-shaped article preferably being fed through an outlet section of said strip-shaped article.

Preferably said outlet section is movable along a displacement direction, said displacement direction being preferably substantially parallel to said feed direction.

Preferably said outlet section is movable forwards and backwards along said displacement direction.

By moving the outlet section it is possible to change the position from which the strip-shaped article exits to be supplied to the winding heads. In this way the winding heads will be able to grasp the strip-shaped article more easily, as well as it will be possible to adjust the length of the strip between the head on which it is wound and the feed unit.

In preferred embodiments it may be envisaged cutting said strip-shaped article in a position downstream of said feed unit.

By cutting the strip-shaped article downstream of the feed unit, it is possible to make stopping the strip unnecessary in the moment in which it is cut, making it possible to coordinate the cutting action with the movement of the head performed through the relative movement device.

Preferably said winding head is positioned at a minimum distance from said outlet section preparing for said step of cutting said strip-shaped article.

Also thanks to this characteristic, it is possible to minimize the length of the part of the strip-shaped article exiting the feed unit when the cut is made, thus simplifying the management and, in particular, the winding operations on the two sections of strip-shaped article which are generated as a result of cutting.

Preferably, the method comprises providing a cutting device for cutting said strip-shaped article and displacing said cutting device integrally with said movable portion and/or with said winding head and/or with said strip-shaped article, while the strip-shaped article is being cut.

In this way it is possible to make the cut during the movement of the winding heads, without therefore needing to stop the strip and, consequently, allowing a continuous process for making the coil.

In preferred embodiments it may be envisaged moving said winding heads according to a trajectory formed by at least:
a rotation about a rotation axis of said movement device, said rotation axis being different from said winding axis; and
a translation and/or a rotation around a further axis, different from said rotation axis and from said winding axis.

Thanks to these steps, it is possible to obtain, with a constructively simple solution and, as such, able to achieve high speeds, the trajectories necessary for the winding heads can be obtained, in order to achieve the winding of the strip during the movement of the head itself, without this entailing states of tension or movements that are difficult to control for the strip.

In preferred embodiments, it may be envisaged moving at the same time said outlet section and said winding head to which said strip-shaped article is fed, keeping them at a predetermined distance.

Also thanks to these characteristics, it is possible to control, in the various steps of making the coil, the distance between the feed unit and the winding head, providing for the appropriate distance in order to carry out the winding, minimizing the states of tension and allowing, when necessary, the cutting of the strip-shaped article.

Preferably, it can be envisaged moving said outlet section and said winding head simultaneously, while said winding head is winding said strip-shaped article. Said strip-shaped article is grasped and is moved by said winding head in such a way that said strip-shaped article is subjected to a substantially constant tension upstream of said winding head.

In this way, it is possible to subject the strip-shaped article to a substantially constant tension, in particular while making the coil, thanks to the fact that the winding takes place while the winding head is being displaced.

Preferably said shaped strip-shaped article is fed through said outlet section at a feed rate substantially equal to the sum of a winding speed of said strip-shaped article and a displacement speed at which said winding head on which said strip-shaped article is being wound is displaced.

In this way it is possible to control the tension by simply controlling the speeds on the basis of which the apparatus is made to operate, thus allowing easy control of the different operating steps. In preferred embodiments it may be envisaged combining a plurality of layers so as to form said strip-shaped article, at least one of said strips being continuously fed.

Preferably said feed rate is constantly greater than zero, and still more preferably substantially constant.

Also these characteristics allow to make the coil without interrupting the feeding of the strip, thus avoiding interruptions in the movement of the strips that could generate unwanted states of tension or in any case decrease the productivity of the apparatus.

Preferably, it is envisaged coupling said strips to form said strip-shaped article by partially winding them on a coupling roller.

Preferably, said outlet section is defined at said coupling roller.

Also thanks to these characteristics, it is possible to group the strips in order to obtain a multilayer strip-shaped article with a solution that allows a continuous advancement of the strips. Furthermore, the position at which the strips are coupled can be advantageously modified during the different operating steps of the apparatus.

In preferred embodiments it may be envisaged moving said winding heads along a first and a second portion of said operative segment substantially parallel to each other, each winding head being displaced in a first direction along said first portion and in a direction opposite to said direction, in said second portion.

In this way it is possible to obtain an operative segment that is widely extended and to use a movement device that is relatively simple from a construction point of view, since it is possible to use kinematic mechanisms that are not excessively complex for two substantially parallel segments to be run.

Furthermore, the operating steps of the winding heads or more generally of the method according to the present invention can be optimized as the winding heads can move along two parallel or even substantially coincident segments, but in two directions opposite to each other.

Preferably each gripping device is configured to wind said strip-shaped article along said first portion at a different speed than said second portion.

Preferably said winding head is displaced in a direction concordant to said feed direction in said first portion and in a direction discordant to said feed direction in said second portion.

Said strip-shaped article is preferably wound at a higher speed when a respective winding head is displaced along said second portion.

Thanks to the use of different winding speeds it is possible to keep a substantially constant tension on the strip-shaped article during its winding, in particular in the case where it is continuously fed. In preferred embodiments, it can be envisaged moving said winding heads along a third portion of said operative segment, preferably substantially parallel to said first and second portions, said winding head being preferably displaced in a direction concordant to said feed direction along said third portion.

Thanks to these characteristics, it is possible to optimally exploit the movement of the winding heads to make the winding of the strip-shaped article as rapidly as possible, taking into account the fact that during the winding the winding head moves and, at the same time, the strip-shaped article continues to be fed.

Preferably at least one of said strips advances at a substantially constant speed along a segment comprised between an inlet section through which said strips are individually provided and said outlet section.

In preferred embodiments, it may be envisaged storing an amount of said at least one strip before it is grasped by said winding head, and preferably said stored amount being variable during the displacement of said winding heads.

Preferably said strips comprise conductor strips and separator strips, said method comprising storing at least one of said conductor strips during an advancement thereof between said inlet section and said outlet section.

Also thanks to this characteristic it is possible to provide for steps in which, while continuing to advance at least one of the strips, this is not provided, and in particular wound, to the winding heads. In this way, the cutting steps can be better managed and/or it is possible to provide for strips with different lengths in the case of a strip-shaped article formed by a plurality of overlapping layers.

Preferably it may be envisaged slowing down or stopping feeding one or more of said strips, said variable amount of one or more of said strips that is stored being stored when said feeding is slowed down or stopped.

In this way, the storage of the strip can take place when it is slowed down or stopped, thus preventing tensions from being generated on the strip and allowing to continuously advance the single strip without this being fed through the outlet section of the feed unit.

Preferably said outlet section is displaced, preferably along said displacement direction, when said strip-shaped article is stored.

Preferably said winding heads move simultaneously, keeping a substantially constant distance from each other.

Preferably, the winding heads move integrally with said outlet section.

In this way it is possible to simultaneously store all the strips which form the strip-shaped article, for example when the movement device, and hence the movable portion, move along the first portion of the operative segment, and quickly wind the strip thus stored, when it comes back to the second portion of the operative segment.

Preferably storing said at least one strip comprises varying a distance run by said at least one strip between said inlet section and said outlet section.

Also thanks to this characteristic, it is possible to stagger the advancement of a single strip, or of more specific strips, with respect to the remaining strips in the event that the strip-shaped article is formed by several overlapping strips, without the need to stop the advancement of the strips.

Preferably said operative segment includes a substantially straight segment.

The presence of a straight segment along which the winding takes place is particularly advantageous in order to avoid undesirable states of tension on the strip-shaped article.

In preferred embodiments, it may be envisaged discharging said coil after winding, at least partially, said strip-shaped article, said winding heads being returned, after discharging said coil, to a gripping position along said working path at the gripping of said portion of strip-shaped article. Also these characteristics contribute to making it possible for the method of the present invention to take place in a cyclic manner, advantageously providing an operating part in which the winding heads perform the winding and, in general, make the coil, and a reset part in which the heads can return to a suitable position to restart the cycle.

Preferably said plurality of winding heads comprises at least a first winding head and a second winding head, said method comprising varying the distance between said first winding head and said second winding head along said working path.

The variation of the distance between the two winding heads makes it possible to efficiently manage the steps of making the coil, in particular by varying the distance between the two heads between the steps in which the winding takes place and those in which the strip-shaped article is cut.

Preferably it may be envisaged approaching said first winding head to said second winding head along said working path preparing for said step of cutting said strip-shaped article.

In this way the cutting of the strip-shaped article is carried out between the two winding heads minimizing the dimensions of the two flaps of the strip-shaped article which are generated after the cut, one head being as close as possible to the other.

Preferably it can be envisaged moving said first winding head away from said outlet section and positioning said second winding head in an intermediate position between said first winding head and said outlet section, while said first winding head is grasping said portion of said strip-shaped article.

Also thanks to this characteristic, it is possible to arrange the second winding head so that it grasps the strip-shaped article while the other winding head is still winding, or in any case grasping, the strip-shaped article itself. In this way, when the second movement head grasps the strip-shaped article, this is still wound on the first winding head.

Preferably when said first winding head runs along said third portion, said second winding head, which precedes said first winding head, runs along said first portion.

This characteristic also allows to optimize the overall dimensions of the apparatus. Furthermore, it may preferably be envisaged performing, at least in part, the winding of two coils simultaneously, in that, after cutting the strip-shaped article, the first winding head ends winding the remaining flap along the third portion and the second winding head starts winding along the first portion.

Preferably grasping said portion of strip-shaped article comprises arranging said portion of strip-shaped article between a pair of pins, at least one of said pins being movable so as to join the other pin holding said strip-shaped article between them.

In this way, it is possible to grasp and block the strip-shaped article, in such a way as to wind it, in a simple way and as part of a continuous and automated process.

Preferably said pin is movable along an exsegmention direction transverse, preferably perpendicular, to said feed direction of said strip-shaped article.

Thanks to this characteristic, during the movement of the head, a single pin is approached to the strip, the other being instead brought at the first pin only once it has reached the strip.

Preferably said pins are both movable, said method comprising moving said pins independently of each other to grasp said portion of strip-shaped article and moving said pins in conjunction with each other to discharge said coil from said winding head, once said coil has been made by winding said strip-shaped article.

In this way the same pins can be advantageously used both for grasping the strip-shaped article and starting the winding thereof, and for discharging the coil once it has been made.

It should be noted that some steps of the methods described above may be independent of the order of execution reported. In addition, some steps may be optional. In addition, some steps of the methods may be performed repetitively, or they may be performed in series or in parallel with other steps of the method.

The characteristics and advantages of the invention will become clearer from the detailed description of a preferred embodiment thereof, shown by way of non-limiting example, with reference to the appended drawings wherein:
- Figure 1 is a schematic, frontal view of the apparatus according to the present invention;
- Figure 2 is a perspective view of an apparatus made in accordance with the present invention;
- Figures 3 to 8 are schematic front views illustrating the apparatus according to the present invention during different operating steps;
- Figure 9 is a further perspective view of the apparatus according to the present invention, with some components removed for illustrative clarity;
- Figure 10 is a schematic view according to a perspective view of an alternative embodiment of the apparatus according to the present invention;
- Figure 11 is a schematic illustration showing two discordant directions according to the meaning of the present invention; and
- Figure 12 illustrates an alternative embodiment of a movable portion of a feed unit of the apparatus according to the present invention, while it is moved to store an amount of strip.

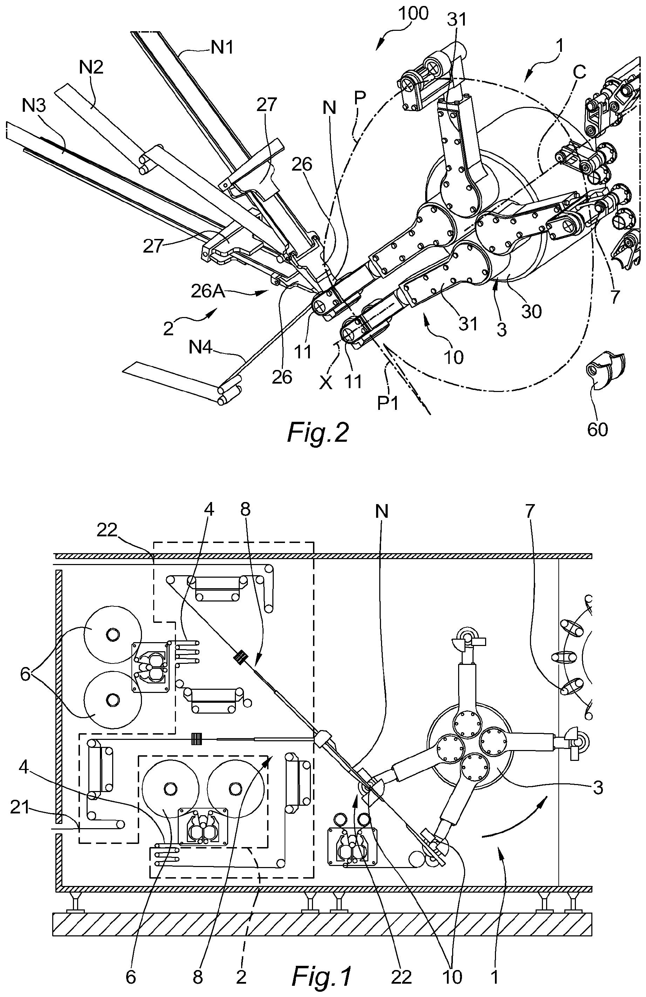

With reference initially to Figures 1 and 2, an apparatus for making a coil B made in accordance with the present invention is indicated as a whole with 100.

In preferred embodiments, the apparatus 100 is intended to carry out the winding of a strip-shaped article N intended for the production of electrochemical cells.

It is however understood that this represents a possible embodiment example and that the apparatus 100 according to the present invention may be intended for winding strip-shaped articles also intended for different uses, even in fields other than those relating to the production of electrochemical cells.

For example, still in the field of energy storage, the present invention can find application in the production of other rolled components intended for batteries or supercapacitors.

In some embodiments, such as for example the one illustrated in Figure 1, the apparatus 100 may be used within a line for the production of coil for electrochemical cells, in which the strip-shaped article N is made by a combination of multiple strips N1, N2, N3, N4, preferably overlapped into layers.

Such strips advantageously comprise at least two conductor strips N1, N3 and two separator layers N2, N4, which are arranged alternated to form the strip-shaped article N.

In this way the separator strips N2, N4 can allow to keep the two conductor strips N1 and N3 electrically separated from each other as they are spirally wound, forming the coil intended for the electrochemical cell.

In preferred embodiments, the strips N1, N2, N3, N4 are provided by suitable delivery devices 6. By way of example, Figure 1 illustrates an embodiment example of the delivery devices 6 of the separator strips, which can be formed by large-sized coils in which the strip is collected so as to be unwound and therefore provided during operation of the apparatus.

The strips provided by the delivery devices 6 are then supplied to a feed unit 2 which, in preferred embodiments, takes care of combining the strips between them in such a way as to form the strip-shaped article N before it is wound by a relative winding unit 1, the characteristics of which will be described in detail below.

Preferably, the feed unit 2 comprises an inlet section 21 preferably adapted to receive the strips from the respective delivery devices 6 and an outlet section 22 through which said strip-shaped article N passes through when it comes out from the feed unit 2 and is fed to the winding unit 1.

Between the inlet section 21 and the outlet section 22 a feed path 8 for the strips is thus defined.

It will be appreciated that the strips, before being provided to the feed unit 2, can pass through further units for example intended to carry out preliminary processing on the strips. For example, the conductor strips may be subjected to preliminary etching operations to form a relative outer edge in order to favour the connections with the further conductor portions within the electrochemical cell.

As previously mentioned, the strips N1, N2, N3, N4 can be combined inside the feed unit so as to form the strip-shaped article N to be wound for making the coil.

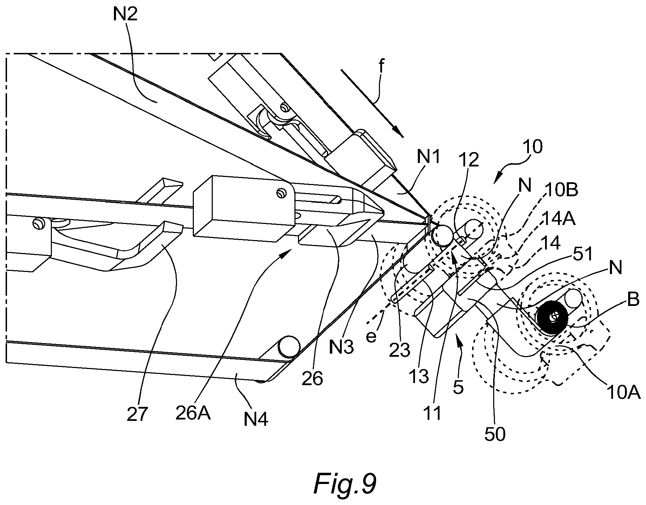

For this purpose, it can be provided that the strips N1, N2, N3, N4 are advanced along different directions to converge towards a coupling roller 23, visible in Figure 9, on which they are all partially wound in such a way that, downstream of said strip, there is a single multilayer structure forming the strip-shaped article N.

In preferred embodiments the strips N1, N2, N3, N4 are fed continuously inside the feed unit 2.

In other words, each strip, or in case one or more of the aforementioned strips, is introduced into the feed unit 2 without ever stopping, proceeding with a speed greater than zero and preferably substantially constant.

However, there may be the need to provide for interruptions of one or more of the strips forming the strip-shaped article N or to slow down the advancement of one or more of the strips for other operational needs linked to the specific processing being carried out.

For example, for making coils intended for making electrochemical cells, it may be provided that the strips that form anode and cathode respectively are not present in the terminal portion of the strip-shaped article that is wound to form the coil. In other words, it can be provided that the coil has a terminal flap in which only the two separator strips are present overlapped.

For this and other purposes, it can be provided for the presence of a storage device 4 configured in such a way as to store an amount of at least one of said plurality of strips N1, N2, N3, N4 between the inlet section 21 and the outlet section 22 of the device.

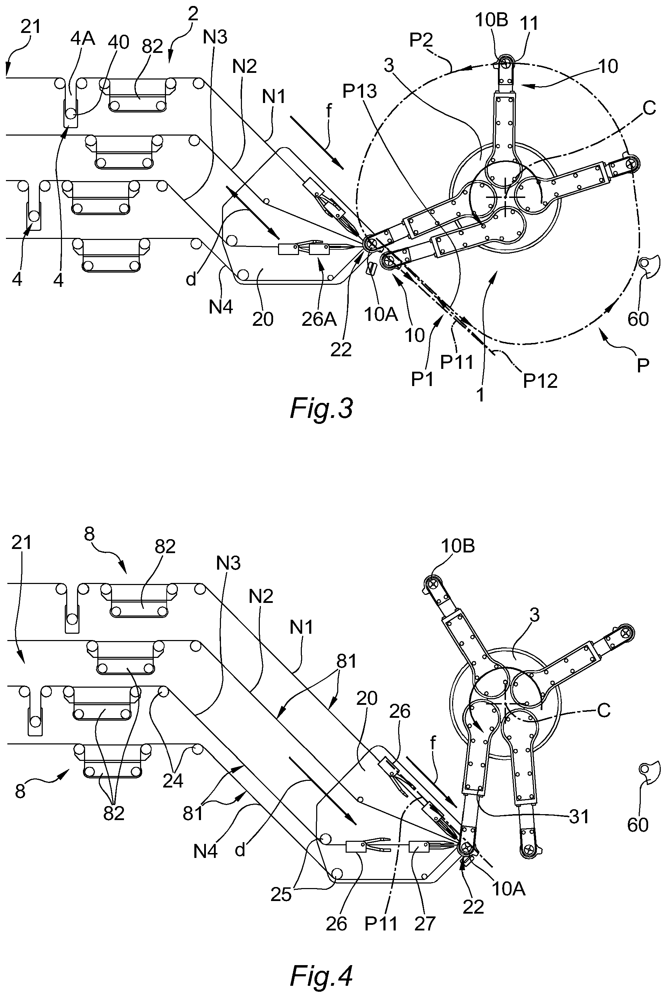

As illustrated in the embodiment example of Figure 3, in preferred embodiments the storage device 4 comprises at least one movable element 4A configured to vary an overall length of said feed path by moving said movable element 4A.

The amount of stored strip can be variable, in that it can be provided that the amount of strip, in terms of length, that is stored is variable during the different steps of the process, in order to meet specific needs as mentioned above.

For this purpose, a device for actuating the storage device 4 can be provided which displaces the storage device 4 to vary the amount of strip stored.

As illustrated in the example of Figure 3, the movable element 4A may comprise at least one movable roller 40, on which the strip of which a certain amount is to be stored is wound.

The strip is then wound on the movable roller 40 and on at least one fixed roller. In this way, by varying the distance between the two rollers, the length of the path that the strip must travel between the inlet section 21 and the outlet section 22 can be varied, effectively allowing the desired amount to be stored.

In this way, for example considering the example of Figure 3, by lowering the movable roller 40 the length of the strip N1 can be increased and, considering a constant or substantially constant advancement speed at the inlet to the feed unit 2, the part of the strip at the outlet section can be slowed down or stopped with respect to the other strips.

Note also that in preferred embodiments, the action of the movable roller 40, or more generally of the storage device 4, may be associated with a strip holding device 26A configured to slow down or stop feeding one or more of the strips.

In other words, the action of the storage device 4 can be coordinated with the one of the holding device 26A so that the storage device 2 stores the strip N when the holding device 26A slows down or stops feeding the strip.

For example, in some embodiments the presence of a gripper 26, illustrated for example in Figure 2, or other similar holding element, acting on the strip at the time when it is required to be stopped or slowed down may be provided in order to slow down the movement of such a part of strip.

The gripper 26 can be advantageously movable, so as to adjust the advancement speed of the relative strip by controlling its movement.

The gripper 26 can also be associated with a relative knife 27 which, if necessary, cuts one of the strips, to create an interruption in the continuity of this strip within the overall strip-shaped article N.

With reference now to Figures 1 and 2, the winding unit 1 is arranged immediately downstream of the feed unit 2 so as to receive the strip-shaped article N formed by it.

Preferably, the strip-shaped article N is fed by being displaced along a feed direction f, which in preferred embodiments corresponds to the direction along which the strip-shaped article N moves once it is formed by combining the individual strips N1, N2, N3, N4 and possibly the direction that it assumes between the roller 23 and the winding unit 1.

In general, however, it will be possible to define an overall advancement direction of the strip-shaped article N according to the characteristics of the feed unit 2 and of the ways in which the strips are combined within it.

Again with reference to Figures 2 and 3, in preferred embodiments, the winding unit 1 comprises a plurality of winding heads 10, each of which allows the strip-shaped article N to be wound according to manners described in greater detail below.

The winding heads 10 are movable within a working path P, which is preferably closed, as schematically shown in Figure 3.

The movement of the winding heads 10 is achieved by a respective movement device 3 through which it is possible to have each head travel along the working path P.

In some embodiments, such as for example the one illustrated in Figure 2, the movement device 3 comprises a rotatable body 30 that can rotate about a rotation axis C.

The rotatable body 30 supports a plurality of extendable arms 31, which are preferably hinged at one end thereof to the rotatable body 30 and, at an opposite end thereof, a respective winding head 10 is in turn supported.

Advantageously, the combination of the rotatable body 30 and of the extendable arms 31 allows the winding heads to perform the displacements that are necessary to follow the working path P.

In preferred embodiments, this causes the winding heads 10 to move according to a trajectory that includes at least one rotation about the rotation axis C of the movement device 3 and a translation and/or a rotation about a further axis, different from said rotation axis C.

It can therefore be observed how, in the embodiments illustrated in the figures, the rotation around the further axis is achieved through the oscillation of the arms 31 around the axis passing through the end connected to the rotatable body 30.

However, it is evident that different combinations of such movements can also be envisaged which can be performed both simultaneously and one in succession to the other.

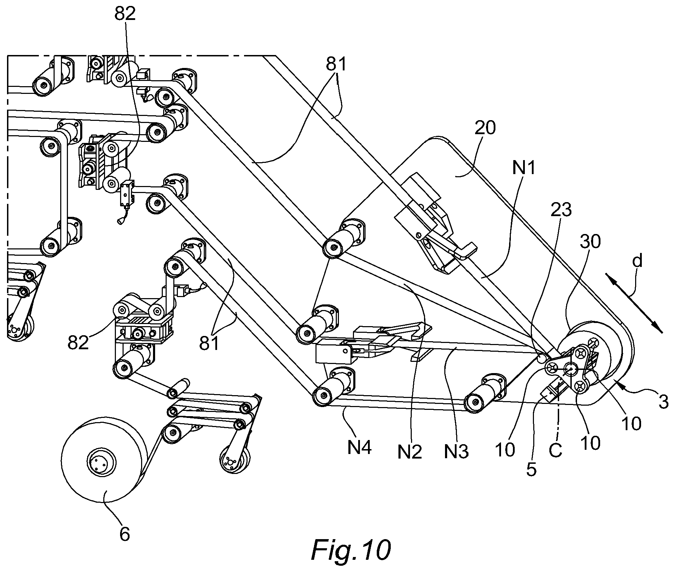

Figure 10 illustrates an embodiment variant of the present invention in which the winding heads 10 are directly fixed on the rotatable body 30, therefore without using the extendable arms. The rotatable body 30 is also advantageously movable, in addition to around its rotation axis C, also in a displacement direction d along which said rotatable body 30 and, in general, the movement device 3, can be displaced.

Referring now again to Figure 2, in some embodiments each winding head 10 supports a gripping device 11 that is configured to grasp a portion of said strip-shaped article N.

The winding of the strip-shaped article N can thus be obtained by rotation of the gripping devices 11 themselves around a winding axis X. By grasping one end of the strip-shaped article N or, more generally, a portion thereof, and by rotating this end or portion, it is in fact possible to wind the strip-shaped article N obtaining a spiral configuration that forms the coil.

Referring now also to Figure 9, each gripping device 11 preferably comprises a pair of pins 12, 13 between which the strip-shaped article N is held.

At least one of the two pins is movable so as to be able to join the other pin holding said strip-shaped article N between them.

The pins 12, 13 are arranged substantially parallel to the winding axis X of the strip-shaped article and can also be rotated to perform the winding of the turns.

In order to allow the pins to grasp the strip-shaped article N, it may be provided that at least one of the two pins is movable along an exsegmention direction e. In this way, a first pin 12 of the pair can approach the strip-shaped article N during the movement of the relative head 10 along the path P.

The second pin 13, which is movable, is instead intended to be arranged in a downstream position along the path P with respect to the fixed pin 12. In this way the strip-shaped article can be comprised between the two pins 12, 13.

For this purpose, the movement of the exsegmention direction and of the movable pin 13 is substantially parallel or more generally not perpendicular, with respect to the axis X and perpendicular, or more generally transverse, with respect to the feed direction f of said strip-shaped article N.

In this way, the second pin 13 can be placed in a position that does not interfere with the approach of the first pin 12 to the strip-shaped article N and it is possible to displace the second pin 13 to a position that holds the article N once the first pin 12 is positioned.

Advantageously also the first pin 12 can be configured in such a way as to move along the exsegmention direction and, simultaneously with the second pin 13, in order to allow discharging the coil, as will be illustrated in greater detail below.

Figures 3 to 8 illustrate the movement of the winding heads 10 and, in general, the operation of the present invention in a preferred embodiment.

Below these figures will be described in relation to two winding heads 10, it being evident that the same concepts will be applicable to an indefinite number of heads.

A first winding head 10A and a second winding head 10B are therefore identified in Figure 3, the second one being arranged in an upstream position along the working path P with respect to the first head 10A.

In the condition of Figure 3, the first winding head 10A is in a position adjacent to the outlet section 22 of the feed unit, in the position in which it receives the strip-shaped article N therefrom. The second winding head 10B is instead arranged along a reset segment P2 of the working path P. This reset segment P2 allows the path P to be closed, and is in particular the segment along which the winding heads return to the beginning of the operative segment P1 after having wound the strip-shaped article, formed the coil and discharged the latter in a discharge zone 7, the latter being schematically indicated in Figures 1 and 2. It will be appreciated that the coil B in this discharge zone 7 is discharged from the winding unit 1 to be transported to other units intended for making the cell.

Preferably the discharge takes place by moving the two pins 12, 13, which are displaced along the exsegmention direction in such a way as to free the coil B from the relative winding head.

After the strip-shaped article N has been grasped by the winding head 10A, it continues its movement along the working path at a first portion P11 of the operative segment P1.

Preferably said first portion P11 is straight and is run in a manner concordant to the feed direction f of the strip-shaped article N.

In some embodiments, the feed unit 2 comprises a movable portion 20, which can be displaced along a displacement direction d and at which the outlet section 22 is formed and on which the coupling roller 23 is preferably fixed.

In some embodiments the displacement direction d forms an angle with respect to the horizontal direction comprised between 30° and 60° and is preferably equal to 45°.

Referring now to Figure 4, preferably the feed paths 8 of the strips N1, N2, N3, N4 comprise a respective storage segment 81 with variable length extending between respective pairs of diverter rollers 24, 25, preferably idle.

Preferably the storage segments 81 extend substantially parallel to each other and the direction of the strips N1, N2, N3, N4, is diverted by the diverter roller 25 so that each of the strips flows to the coupling roller 23. In some embodiments, such as the one illustrated in Figures 1 to 10 and, in particular in Figure 4, the strip N1 is substantially parallel to the displacement direction d of the movable portion 20 and aligned with the storage roller 23 and, consequently, the presence of the roller 25 is not necessary.

Advantageously, the distance between parallel segments 81 is such that it is possible to house the previously illustrated grippers 26 and knives 27 between two adjacent strips in the segment comprised between the diverter roller 25 and the coupling roller 23.

In some embodiments one of the rollers of each pair of diverter rollers 24, 25 is supported on the movable portion 20, so as to move integrally with it, as will be illustrated in greater detail below.

In this way the length of the storage segments 81 of each strip can be simultaneously varied by moving the movable portion 20.

During the advancement of the movable portion 20 the feed unit 2 can therefore store an amount of strip-shaped article N between the inlet section 21 and the outlet section 22.

In fact, as can be noted from the comparison between Figures 3 and 4, the length of the storage segments 81 and, more generally, of the path that the strips N1, N2, N3, N4 run between the inlet section 21 and the outlet section 22, is increased by coordinating the advancement of the strips with the displacement of the movable portion 20, effectively storing an amount of the respective strips between these sections.

Preferably the displacement of the movable portion 20 is associated with the advancement of strips so as not to generate tensions on them. The strips in fact can slide on the diverter rollers 25 while the movable portion 20 is being displaced thus increasing the length of the strip between the roller 24 and the roller 25, without inducing any state of tension. Preferably the displacement speed of the movable portion 20, if it is concordant to the advancement movement of the strips, will be lower than their feed rate.

In this way it is possible to avoid pulling the strip during the movement of the movable portion 20, thus making this displacement neutral with respect to the movement of the strips.

In preferred embodiments, the storage segments 81 extend substantially parallel to each other, remaining substantially parallel even during and following the displacement of the movable portion 20 and, consequently, their variation in length.

This can be achieved by providing that the movable portion 20 is displaced along a displacement direction d substantially parallel to the storage segments 81. In this way, as the movable portion is displaced along the direction d, the storage segments 81 increase or decrease their length by the same amount.

More generally, the displacement direction d may preferably be substantially parallel to the feed direction f.

Alternatively, the same result can be achieved by suitably arranging the rollers 24, 25 between which the storage segments 81 extend.

In particular, in alternative embodiments, such as for example the one illustrated in Figure 12, it can be provided that, unlike the embodiments illustrated in the other figures, both the rollers 24 and the rollers 25 are aligned to each other and aligned with the displacement direction d of the movable portion 20.

It can therefore be noted that the movement of the movable portion 20 is also in this case associated with a change in the length of each of the storage segments 81.

In some embodiments the feed unit 2 comprises, along the feed path 8, one or more alignment devices 82 configured to guide the strips N in order to avoid, or in any case limit, transverse deviations of the same during their advancement. For example, the alignment devices 82 may comprise pivoting carriages which, if the strip undergoes a deviation in the transverse direction with respect to its advancement direction, they urge the strip in such a way as to bring it back in a straight condition.

Referring now again to Figure 4, in some embodiments the movement of the winding head along the portion P11 may be accompanied by a corresponding movement of the movable portion 20 along the displacement direction d.

It should also be noted that the winding heads 10 and the movable portion 20 can be movable in a coordinated manner. In other words, the movement of the winding heads 10 and of the movable portion 20 takes place synchronously.

In this way the distance between the winding head 10 that is winding or more generally holding the strip, and the movable portion 20 of the winding unit 2 can be controlled. Accordingly, it will be advantageously possible to provide that the length of the strip-shaped article N comprised between the winding unit 2 and the winding head that is holding it, is minimal or in any case equal to a predetermined distance.

For example, it can be noted from Figure 4 that also in this operating position the first head 10A is placed adjacent to the outlet section 22 of the feed unit 2.

For this purpose, in preferred embodiments, the displacement direction d can be substantially parallel to the first portion P11 of the operative segment P1.

It will be understood that, as previously mentioned, in the context of the present invention by the term "substantially" referred to the parallelism with respect to the operative segment P1 along which the winding takes place it is intended to mean that the two directions are parallel except for the deviations linked to the winding of the strip-shaped article N. In fact during the winding of the strip-shaped article N the position of the tangent point of the same on the coil being formed is variable and, unless it is compensated for by a movement of the extendable arms 31, it does not follow a perfectly straight line. This can therefore lead to a deviation from a perfect parallelism.

Therefore, as previously illustrated, the term "substantially parallel" will still indicate a possible deviation by ± 10° and preferably ± 5° with respect to a perfect parallelism.

Along the portion P11 the winding head 10 can also start winding the strip-shaped article N.

It will be appreciated that this is in particular linked to the ratio between the feed rate v_{f} at which the strip-shaped article is fed by the feed unit 2 and the displacement speed vₛₚ at which the winding heads move along the portion P11.

In fact, if the feed rate v_{f} is higher than the displacement speed vₛₚ, in this portion it may be envisaged winding the strip-shaped article N at a winding speed such as to compensate for the difference between the two aforementioned speeds.

In this way the amount of strip-shaped article N which is fed is either wound or stored as illustrated above. Accordingly, the strip-shaped article N can be kept at a substantially constant tension by appropriately acting on the movement speeds of the head while it is winding and/or holding the strip-shaped article N.

It will be appreciated that the feed rate v_{f} is preferably determined by the speed at which the delivery coils that form the delivery device 6 are rotated to unwind the strip, pushing, and then feeding, the strip into the feed unit 1 and subsequently into the winding unit 3. More generally, this speed can be determined by the mode of actuation of the delivery device 6.

At the same time, also the winding of the strip-shaped article N through the winding heads 10 can contribute to determining the feed rate v_{f}, with a pulling action on each strip. At most, if the coils, or other delivery device 6, are not motorized, and therefore are idle, the strip could be advanced only by the winding action.

The tension of the strip is also adjusted by the balance between the action of the delivery device 6 and the winding of the strip-shaped article, in a manner conceptually analogous to what has been illustrated in relation to the speeds.

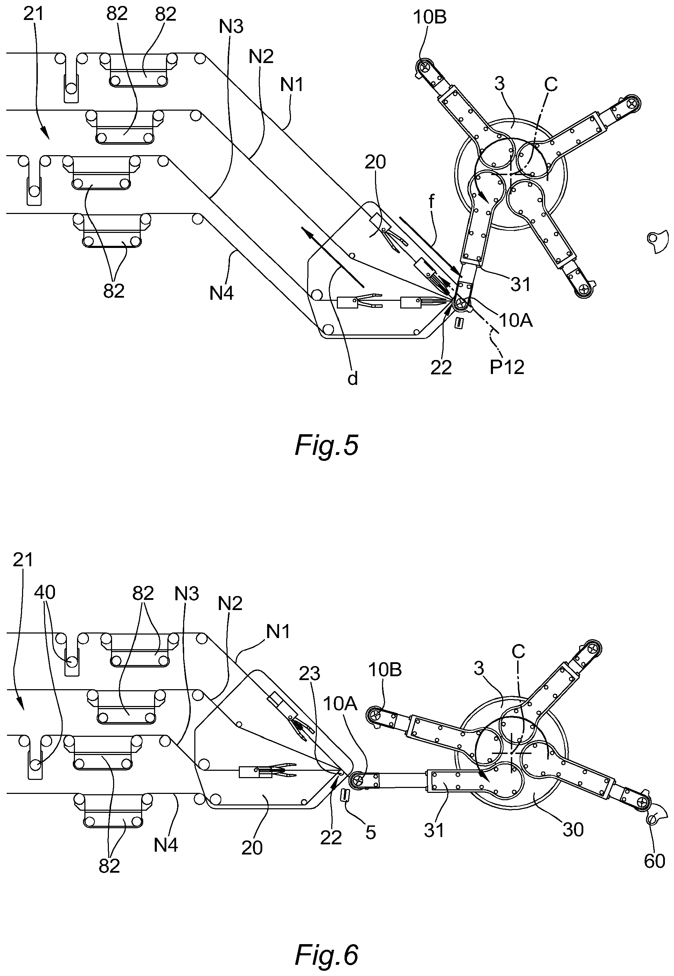

Referring now to Figure 5, once a displacement limit position is reached in a direction concordant with the feed direction f, the winding head 10A is displaced in the opposite direction along a second portion P12 of the operative segment P1.

Also in this case the movement of the head 10A can be advantageously associated with a corresponding displacement of the movable portion 20 of the feed unit 2.

During the movement of the winding head 10A in the portion P12 the strip-shaped article N is wound through the head itself, preferably with a winding speed greater than that provided for the portion P11.

It will be appreciated that the displacement of the winding head 10 while performing such winding takes place in a direction discordant with respect to the feed direction f.

Also the relative portion P12 is preferably substantially parallel to the feed direction f, optionally, to the displacement direction d.

Also in this case the same considerations set out above regarding the term "substantially parallel" apply.

The amounts of strips stored in the previous step can therefore be wound while the winding head 10A is moving along the portion P12.

Also in this step, equivalent considerations apply in relation to the feed rate and the displacement speed of the head made with reference to the portion P11.

The feed rate v_{f}, the winding speed vₐᵥᵥ and the displacement speed vₛₚ will in fact preferably be such as to subject the strip-shaped article N to a substantially constant tension.

As previously illustrated, in preferred embodiments this can be indeed achieved by providing that the feed rate v_{f} is substantially equal to the sum of said winding speed vₐᵥᵥ and said displacement speed vₛₚ.

It will also be appreciated that advantageously the rotatable body 30 of the movement device 3 proceeds with its rotation motion in a continuous manner, while the arm 31 is rotated in the opposite direction, thus making a movement that is contrary to that performed during the movement along the portion P11.

In other words, along the portion P11 and the portion P12 the arm 31 oscillates forwards and backwards so that the winding head can perform the previously described movement and the winding of the strip-shaped article.

At a limit position along the segment P12, illustrated in Figure 6, the first winding head 6 can be moved away from the outlet section 22.

This movement can take place by moving the head itself and/or displacement of the movable portion 20.

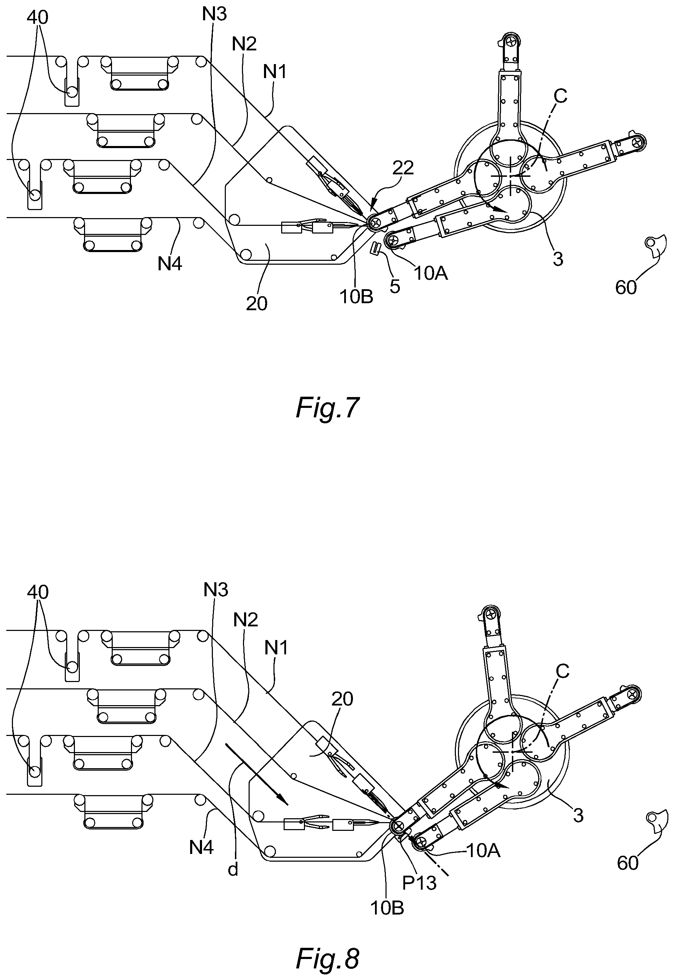

Thus, as visible in Figure 7, a sufficient space may be provided so that a second winding head 10B, arranged upstream of the first head 10A along the path P, can be interposed between the first winding head 10A and the outlet section 22.

In fact, it should be noted that in preferred embodiments it can be provided that the distance between the first winding head 10A and the second winding head 10B is variable along the working path P, depending on the operating steps of the apparatus 100.

Thanks to this characteristic, it is possible to obtain the configuration illustrated by way of example in Figures 7 to 9, in which the two heads 10A and 10B are at a minimum distance such as to allow the positioning of a cutting element 51 of the cutting device 5 between them and the second head 10B is in turn at a predetermined distance, preferably substantially equal to the minimum distance from the movable portion 20 and, more generally, from the feed unit 2.

The two heads are also preferably aligned along the feed direction of the strip-shaped article N.

In this way, it is possible to grasp through the gripping device 11 of the second winding head 10B a relative portion of the strip-shaped article N, as can be noted from Figure 9 and as illustrated above.

The portion of strip-shaped article N can in particular be grasped as illustrated above, by using the pair of pins 12, 13.

In this condition the strip-shaped article N is wound to form the coil B on the first winding head 10A and simultaneously grasped by the second winding head 10B.

In other words, the strip-shaped article N is simultaneously grasped on both the first winding head 10A and on the second winding head 10B.

Moreover, again at this position it is possible to cut the strip-shaped article N at an intermediate position between the first winding head 10A and the second winding head 10B.

For this purpose, a cutting device 5 can be provided which is configured to cut said strip-shaped article N in a position downstream of said feed unit 2 and, advantageously, in the aforementioned position.

In fact, as can be noted from the illustrated embodiment examples, the cutting device 5 advantageously cuts the strip-shaped article N, when the respective winding head 10 is positioned at said predetermined distance from said feed unit 2, advantageously substantially equal to the minimum distance compatible with the kinematic mechanisms that cause the movement of the winding heads 10.

As already illustrated, in conjunction with the cutting, the second winding head 10B is approached to the first winding head 10A, being advantageously at the minimum reciprocal distance along the working path P when the strip-shaped article N is cut.

The cutting device 5 is illustrated in a preferred embodiment thereof in Figure 9.

Preferably the cutting device 5 comprises a main body 50 which supports a cutting element 51.

In some embodiments the winding head 10 comprises an abutment element 14 placed in such a position that the strip-shaped article N is interposed between the abutment element 14 and the cutting device 5.

The abutment element 14 preferably has a seat 14A configured to receive the cutting element 51. In this way, when the cutting device 5 is approached to the abutment element 14, the main body 50 of the cutting device 5 may abut the abutment element 14, with the strip-shaped article N interposed, and the cutting element 51 may be received in the seat 14A, generating a pressure on the strip-shaped article N sufficient to obtain the cutting thereof.

It should be noted that prior to the cutting operation of the strip-shaped article N, it may be provided that the conductor strips N1, N3 are interrupted and their advancement stopped or slowed down by means of the gripper system 26 illustrated previously.

In this way the cut performed by the device 5 can only affect the separator strips N2, N4 which form the strip-shaped article N following the interruption of the conductor strips.

In particular, it can be noted in Figures 7 and 8 the action of the grippers 26 on the conductor strips and the displacement of the movable rollers 40 with respect to the position of Figure 6, in such a way as to store the strip as previously illustrated.

In some embodiments the cutting device 5 is also movable in a direction substantially parallel to the feed direction f. In general it can be provided that the cutting device is movable with at least one component substantially parallel to this direction. For example, the cutting device 5 can be supported on the movable portion 20 or movable integrally therewith. In this way it will be possible both to approach the cutting device 5 to the abutment element 14, and to displace it in a synchronized manner to the strip-shaped article N. In other words, the cutting device 5 copies the movement of the strip-shaped article N, moving synchronously with it when performing the cutting operation.

Also thanks to such characteristics it is possible to provide that the strip-shaped article N is fed with feed rate v_{f} is constantly greater than zero, and preferably substantially constant, it being possible for the cutting to be performed while the strip-shaped article is also moving.

It should also be noted that the strips forming the strip-shaped article N can also be made to advance continuously inside the feed unit 2. In embodiments in which the interruption of the conductor strips, or of other strips forming the strip-shaped article, is envisaged, the continuous advancement will preferably be associated with the possibility of storing the strip. Instead, with regards to the strip or the strips for which no interruptions are envisaged, this/these can be made to advance continuously through the outlet section 22, in continuity with the strip-shaped article N.

Once the strip-shaped article N has been cut, two flaps are defined, one associated with the first winding head 10A that forms the terminal part of the coil wound therein, and one associated with the second winding head 10B that forms the initial part of the coil B that will be subsequently wound.

Preferably, the process for making the coil B provides for a third portion P13 of the operative segment P1, preferably substantially parallel to said first and second portions P11, P12 and along which the winding head 10A is displaced after the cutting of the strip-shaped article N.

In preferred embodiments the winding head moves again in a direction concordant to said feed direction f along said third portion P13.

Preferably said movement device 3 is configured in such a way that when the first winding head 10A runs along said third portion P13, the second winding head 10, which has advantageously just grasped the strip-shaped article N, runs along the first portion P11 performing, in sequence, the steps described above in relation to the first winding head 10A.

Along the portion P13, on the other hand, the first winding head completes the winding of the flap of the strip-shaped article N which was created following the cutting, ending to make the coil B.

As previously illustrated, the winding of the strip-shaped article N to make the coil B can take place in each of the three portions P11, P12, P13.

Preferably, the winding takes place mainly, i.e. for a greater percentage amount, along the second portion P12.

However, the winding may also take place partially in the other portions.

In fact, in preferred embodiments, the winding of the strip takes place for an amount comprised between 5% and 15%, preferably 10%, of the overall length of the strip-shaped article forming a single coil along the first portion P11, for an amount comprised between 70% and 90%, preferably 80%, along the second portion P12 and for an amount comprised between 5% and 15%, preferably 10%, along the third portion P13.

The displacement of the first winding head 10A then continues until it reaches the discharge zone 7, where the coil B is discharged from the winding unit 1.

In some embodiments, the apparatus 100 can comprise further working units 60 at which the winding head 10 passes through with the coil B before reaching the discharge zone 7.

By way of example, the further working unit 60 can comprise a folding device configured to fold the two opposite axial ends of the coil. It can in fact be provided that the conductor strips each protrude axially, the one on one side and the other on the other, and are folded in such a way as to form a single conductor portion intended to be connected to an anode/cathode end in the cell once assembled.

In some embodiments, the application of a closing element of the coil B can also be provided, which closing element is configured in such a way as to prevent it from unwinding once it is discharged from the winding head 10. Such a closing element may for example be represented by a strip applied circumferentially to the coil in order to close the terminal flap of the strip-shaped element.

After discharging the coil, the winding head 10A starts passing through along the reset segment P2 in order to displace itself from a discharge position to a gripping position in which the winding head 10 can grasp the portion of the strip-shaped article N as previously illustrated.

The steps described above can then be repeated cyclically for each of the included winding heads 10 of the winding unit 1.

As mentioned above, Figure 10 illustrates a possible illustrative variant of the apparatus according to the present invention.

In this variant it is provided that the movement device 3 moves integrally with the movable portion 20 of the winding unit 2.

For this purpose, the movement device 3 can be rotatably supported around the rotation axis C on the movable portion 20.

In the embodiments in which the movement device 3 can move as a whole, like in the illustrated example in which it moves along the displacement direction d, it can therefore be provided that the winding heads 10 remain in a substantially fixed position with respect to the rotatable body 3 and that, consequently, their mutual distance remains unchanged.

In other words, the movement heads 10 may in this case be displaced, not only rotating on themselves for winding the strip-shaped article N, by also following the movement of the rotating body of the movement device 3, preferably of its linear displacement. In the embodiment illustrated in Figure 10, as well as more generally others in preferred embodiments not illustrated, such movement includes both the rotation about the axis C, and the translation along the displacement direction d.

However, it will be appreciated that, more generally, the movement of the movement heads 10 can in this case be caused by any rotation and any translation or further rotation, always in addition to the rotation made to wind the strip-shaped article N.

However, these movements do not cause a variation in the mutual distance between the winding heads 10.

However, a combination may be provided between this embodiment and those previously described wherein the distance of the heads is variable.

## Claims

1. Apparatus (100) for making a coil (B) comprising:
- A feed unit (2) configured to feed at least one strip-shaped article (N) by displacing said strip-shaped article (N) along a feed direction (f);
- A winding unit (1) that includes:
∘ A plurality of winding heads (10);
∘ A movement device (3) for moving said winding heads (10) configured to displace said winding heads (10) along a working path (P);
wherein each winding head (10) supports a gripping device (11) which is configured to grasp a portion of said strip-shaped article (N) and is configured to wind said strip-shaped article (N) so as to make said coil (B), said movement device (3) being **characterized by** being further configured so as to displace a respective winding head (10), when it is grasping said portion of said strip-shaped article (N), along an operative segment (P1) of said working path (P) in a direction discordant with respect to said feed direction (f).

2. Apparatus (100) according to claim 1, wherein each winding head (10) is configured to wind said strip-shaped article (N) so as to make said coil (B) during said displacement of said winding head (10) in a direction discordant with respect to said feed direction (f).

3. Apparatus (100) according to any one of the preceding claims, wherein said feed unit (2) comprises an outlet section (22) through which said strip-shaped article (N) passes through when it comes out from said feed unit (2) and is fed to said winding unit (1) and an inlet section (21) preferably adapted to receive at least one strip of said plurality of strips from a respective delivery device (6), a feed path of said strip being comprised between said inlet section (21) and said outlet section (22), wherein said feed unit (2) comprises a movable portion (20) at which said outlet section (22) is formed.

4. Apparatus (100) according to any one of the preceding claims, wherein said at least one strip-shaped article (N) is subjected to a substantially constant tension, at least for a segment comprised between said feed unit (2) and a respective winding head (10) on which said strip-shaped article (N) is wound.

5. Apparatus (100) according to any one of the preceding claims, wherein said movement device (3) is configured to displace each winding head in a first direction along said first portion (P11) and in a direction opposite said first direction, in said second portion (P12), each gripping device being preferably configured to wind said strip-shaped article (N) along said first portion (P11) at a different speed than said second portion (P12).

6. Apparatus (100) according to the preceding claim, wherein said winding head (10) is displaced in a direction concordant to said feed direction (f) in said first portion (P11) and in a direction discordant to said feed direction (f) in said second portion (P12), said winding head (10) preferably being configured to wind said strip-shaped article (N) at a higher speed when a respective winding head (10) is displaced in a direction discordant to said feed direction (f).

7. Apparatus (100) according to the preceding claim, wherein said operative segment (P1) comprises a third portion (P13), preferably substantially parallel to said first and second portions (P11, P12), wherein said winding head (10) is again displaced in a direction concordant to said feed direction (f) along said third portion (P13).

8. Apparatus (100) according to any one of the preceding claims, wherein said coil (B) is for an electrochemical cell intended for the production of batteries and wherein said at least one strip-shaped article (N) comprises conductor strips (N1, N3) and separator strips (N2, N4).

9. Method (100) for making a coil (B), said coil (B) being made by winding at least one strip-shaped article (N), said method (100) comprising:
- providing a plurality of winding heads (10) movable along a working path (P),
- moving said strip-shaped article (N) in a feed direction (f) in such a way as to feed said strip-shaped article (N) to one of said winding heads (10);
- grasping by means of a gripping device (11) of said winding head (10) a portion of said strip-shaped article (N); and being **characterized by** further comprising
- displacing said winding head (10), while it is grasping said portion of strip-shaped article (N), in a direction discordant with respect to said feed direction (f), along an operative segment (P1) of said working path (P).

10. Method according to the preceding claim, comprising winding said strip-shaped article (N) by said winding head (10) said winding head (10) is displaced along said operative segment (P1) of said working path (P).

11. Method according to claim 9 or 10, wherein said strip-shaped article (N) is fed through an outlet section (22), said outlet section (22) being movable, preferably forwards and backwards, along a displacement direction (d), said displacement direction (d) being preferably parallel to said feed direction.

12. Method according to any one of claims 9 or 11, comprising moving said winding heads (10) along a first and a second portion (P11, P12) substantially parallel to each other, each winding head (10) being displaced in a first direction along said first portion (P11) and in a direction opposite said direction, in said second portion (P12), wherein each gripping device is configured to wind said strip-shaped article (N) along said first portion (P11) at a different speed than said second portion (P12).

13. Method according to the preceding claim, wherein said winding head (10) is displaced in a direction concordant to said feed direction (f) in said first portion (P11) and in a direction discordant to said feed direction (f) in said second portion (P12), said strip-shaped article (N) being wound at a higher speed when a respective winding head (10) is displaced along said second portion (P12).

14. Method according to the preceding claim, comprising moving said winding heads (10) along a third portion (P13), preferably substantially parallel to said first and second portions (P11, P12), said winding head (10) being preferably displaced in a direction concordant to said feed direction (f) along said third portion.

15. Method according to any one of claims 9 to 14, wherein said coil (B) is for an electrochemical cell intended for the production of batteries.

## Patentansprüche

1. Vorrichtung (100) zur Herstellung einer Spule (B), umfassend:
- eine Zuführeinheit (2), die eingerichtet ist, um zumindest einen streifenförmigen Gegenstand (N) durch Verschieben des streifenförmigen Gegenstands (N) entlang einer Zuführrichtung (f) zuzuführen,
- eine Wickeleinheit (1), die umfasst:
• eine Mehrzahl von Wickelköpfen (10),
• eine Bewegungsvorrichtung (3) zum Bewegen der Wickelköpfe (10), die eingerichtet ist, um die Wickelköpfe (10) entlang eines Arbeitsweges (P) zu verschieben;
- wobei jeder Wickelkopf (10) eine Greifvorrichtung (11) trägt, die eingerichtet ist, um einen Bereich des streifenförmigen Gegenstands (N) zu greifen, und eingerichtet ist, um den streifenförmigen Gegenstand (N) derart aufzuwickeln, um die Spule (B) herzustellen, wobei die Bewegungsvorrichtung (3) **dadurch gekennzeichnet ist, dass** sie ferner eingerichtet ist, um einen jeweiligen Wickelkopf (10), wenn dieser den Bereich des streifenförmigen Gegenstands (N) greift, entlang eines Arbeitsabschnitts (P1) des Arbeitswegs (P) in eine Richtung zu verschieben, die von der Zuführrichtung (f) abweicht.

2. Vorrichtung (100) nach Anspruch 1, wobei jeder Wickelkopf (10) eingerichtet ist, um den streifenförmigen Gegenstand (N) während der Verschiebung des Wickelkopfs (10) in eine Richtung, die von der Zuführrichtung (f) abweicht, zur Spule (B) aufzuwickeln.

3. Vorrichtung (100) nach einem der vorhergehenden Ansprüche, wobei die Zuführeinheit (2) einen Auslassabschnitt (22), durch den der streifenförmige Gegenstand (N) hindurchgeht, wenn er aus der Zuführeinheit (2) austritt und der Wickeleinheit (1) zugeführt wird, und einen Einlassabschnitt (21) aufweist, der vorzugsweise angepasst ist, um zumindest einen Streifen der Mehrzahl von Streifen von einer jeweiligen Zuführvorrichtung (6) aufzunehmen, wobei ein Zuführweg des Streifens zwischen dem Einlassabschnitt (21) und Auslassabschnitt (22) ausgebildet wird, wobei die Zuführeinheit (2) einen beweglichen Bereich (20) aufweist, an dem der Auslassabschnitt (22) ausgebildet ist.

4. Vorrichtung (100) nach einem der vorhergehenden Ansprüche, wobei zumindest ein streifenförmiger Gegenstand (N) zumindest für einen Abschnitt zwischen der Zuführeinheit (2) und einem jeweiligen Wickelkopf (10), auf den der streifenförmige Gegenstand (N) aufgewickelt ist, einer im Wesentlichen konstanten Spannung ausgesetzt ist.

5. Vorrichtung (100) nach einem der vorhergehenden Ansprüche, wobei die Bewegungsvorrichtung (3) eingerichtet ist, um jeden Wickelkopf in eine erste Richtung entlang des ersten Bereichs (P11) und in eine der ersten Richtung entgegengesetzten Richtung im zweiten Bereich (P12) zu verschieben, wobei jede Greifvorrichtung vorzugsweise eingerichtet ist, um den streifenförmigen Gegenstand (N) entlang des ersten Bereichs (P11) mit einer anderen Geschwindigkeit als im zweiten Bereich (P12) aufzuwickeln.

6. Vorrichtung (100) nach dem vorhergehenden Anspruch, wobei der Wickelkopf (10) im ersten Bereich (P11) in eine Richtung verschoben wird, die mit der Zuführrichtung (f) übereinstimmt, und im zweiten Bereich (P12) in eine Richtung verschoben wird, die von der Zuführrichtung (f) abweicht, wobei der Wickelkopf (10) vorzugsweise eingerichtet ist, um den streifenförmigen Gegenstand (N) mit einer höheren Geschwindigkeit aufzuwickeln, wenn der jeweilige Wickelkopf (10) in eine Richtung verschoben wird, die von der Zuführrichtung (f) abweicht.

7. Vorrichtung (100) nach dem vorhergehenden Anspruch, wobei der Arbeitsabschnitt (P1) einen dritten Bereich (P13) aufweist, der vorzugsweise im Wesentlichen parallel zu den ersten und zweiten Bereichen (P11, P12) verläuft, wobei der Wickelkopf (10) entlang des dritten Bereichs (P13) erneut in eine Richtung verschoben wird, die mit der Zuführrichtung (f) übereinstimmt.

8. Vorrichtung (100) nach einem der vorhergehenden Ansprüche, wobei die Spule (B) für eine elektrochemische Zelle zur Herstellung von Batterien bestimmt ist und wobei zumindest ein streifenförmiger Gegenstand (N) Leiterstreifen (N1, N3) und Separatorstreifen (N2, N4) aufweist.

9. Verfahren (100) zur Herstellung einer Spule (B), wobei die Spule (B) durch Aufwickeln zumindest eines streifenförmigen Gegenstands (N) hergestellt wird, wobei das Verfahren (100) aufweist:
- Vorsehen einer Mehrzahl von Wickelköpfen (10), die entlang eines Arbeitsweges (P) beweglich sind,
- Bewegen des streifenförmigen Gegenstands (N) in eine Zuführrichtung (f), so dass der streifenförmige Gegenstand (N) einem der Wickelköpfe (10) zugeführt wird;
- Ergreifen eines Bereichs des streifenförmigen Gegenstands (N) mittels einer Greifvorrichtung (11) des Wickelkopfs (10); und **dadurch gekennzeichnet, dass** es ferner aufweist:
- Verschieben des Wickelkopfes (10), während dieser den Bereich des streifenförmigen Gegenstands (N) ergreift, in eine Richtung, die von der Zuführrichtung (f) abweicht, entlang eines Arbeitsabschnitts (P1) des Arbeitsweges (P).

10. Verfahren nach dem vorhergehenden Anspruch, das ein Aufwickeln des streifenförmigen Gegenstands (N) durch den Wickelkopf (10) aufweist, wobei der Wickelkopf (10) entlang des Arbeitsabschnitts (P1) des Arbeitsweges (P) verschoben wird.

11. Verfahren nach Anspruch 9 oder 10, wobei der streifenförmige Gegenstand (N) durch einen Auslassabschnitt (22) zugeführt wird, wobei der Auslassabschnitt (22) entlang einer Verschiebungsrichtung (d) beweglich ist, vorzugsweise vorwärts und rückwärts, wobei die Verschiebungsrichtung (d) vorzugsweise parallel zur Zuführrichtung verläuft.

12. Verfahren nach einem der Ansprüche 9 oder 11, das ein Bewegen der Wickelköpfe (10) entlang eines ersten und eines zweiten Bereichs (P11, P12) aufweist, die im Wesentlichen parallel zueinander verlaufen, wobei jeder Wickelkopf (10) in eine erste Richtung entlang des ersten Bereichs (P11) und in eine zu dieser Richtung entgegengesetzten Richtung verschoben wird, wobei jede Greifvorrichtung eingerichtet ist, um den streifenförmigen Gegenstand (N) entlang des ersten Bereichs (P11) mit einer anderen Geschwindigkeit als entlang des zweiten Bereichs (P12) aufzuwickeln.

13. Verfahren nach dem vorhergehenden Anspruch, wobei der Wickelkopf (10) im ersten Bereich (P11) in eine Richtung verschoben wird, die mit der Zuführrichtung (f) übereinstimmt, und im zweiten Bereich (P12) in eine Richtung verschoben wird, die von der Zuführrichtung (f) abweicht, wobei der streifenförmige Gegenstand (N) mit einer höheren Geschwindigkeit aufgewickelt wird, wenn ein jeweiliger Wickelkopf (10) entlang des zweiten Abschnitts (P12) verschoben wird.

14. Verfahren nach dem vorhergehenden Anspruch, das ein Bewegen der Wickelköpfe (10) entlang eines dritten Bereichs (P13) aufweist, vorzugsweise im Wesentlichen parallel zu den ersten und zweiten Bereichen (P11, P12), wobei der Wickelkopf (10) entlang des dritten Abschnitts vorzugsweise in eine Richtung verschoben wird, die mit der Zuführrichtung (f) übereinstimmt.

15. Verfahren nach einem der Ansprüche 9 bis 14, wobei die Spule (B) für eine elektrochemische Zelle zur Herstellung von Batterien bestimmt ist.

## Revendications

1. Appareil (100) pour la fabrication d'une bobine (B) comprenant :
- une unité d'alimentation (2) conçue pour acheminer au moins un article en forme de bande (N) en déplaçant ledit article en forme de bande (N) selon une direction d'alimentation (f) ;
- une unité d'enroulement (1) qui comprend :
∘ une pluralité de têtes d'enroulement (10) ;
∘ un dispositif de déplacement (3) destiné à déplacer lesdites têtes d'enroulement (10), conçu pour déplacer lesdites têtes d'enroulement (10) le long d'un chemin de travail (P) ;
dans lequel chaque tête d'enroulement (10) supporte un dispositif de préhension (11) qui est conçu pour saisir une partie dudit article en forme de bande (N) et pour enrouler ledit article en forme de bande (N) de manière à former ladite bobine (B), ledit dispositif de déplacement (3) **se caractérisant par le fait qu'**il est en outre conçu de manière à déplacer une tête d'enroulement (10) respective, lorsqu'elle saisit ladite partie dudit article en forme de bande (N), le long d'un segment opérationnel (P1) dudit chemin de travail (P) dans une direction discordante avec ladite direction d'alimentation (f).

2. Appareil (100) selon la revendication 1, dans lequel chaque tête d'enroulement (10) est conçue pour enrouler ledit article en forme de bande (N) de manière à former ladite bobine (B) pendant ledit déplacement de ladite tête d'enroulement (10) dans une direction discordante avec ladite direction d'alimentation (f).

3. Appareil (100) selon l'une quelconque des revendications précédentes, dans lequel ladite unité d'alimentation (2) comprend une section de sortie (22) à travers laquelle ledit article en forme de bande (N) passe lorsqu'il sort de ladite unité d'alimentation (2) et est acheminé vers ladite unité d'enroulement (1), ainsi qu'une section d'entrée (21) adaptée de préférence pour recevoir au moins une bande parmi ladite pluralité de bandes provenant d'un dispositif de distribution (6) respectif, le chemin d'alimentation de ladite bande étant compris entre ladite section d'entrée (21) et ladite section de sortie (22), dans lequel ladite unité d'alimentation (2) comprend une partie mobile (20) au niveau de laquelle est formée ladite section de sortie (22).

4. Appareil (100) selon l'une quelconque des revendications précédentes, dans lequel ledit au moins un article en forme de bande (N) est soumis à une tension sensiblement constante, au moins sur un segment compris entre ladite unité d'alimentation (2) et une tête d'enroulement (10) respective sur laquelle ledit article en forme de bande (N) est enroulé.

5. Appareil (100) selon l'une quelconque des revendications précédentes, dans lequel ledit dispositif de déplacement (3) est conçu pour déplacer chaque tête d'enroulement dans une première direction le long de ladite première partie (P11) et dans une direction opposée à ladite première direction, dans ladite deuxième partie (P12), chaque dispositif de préhension étant de préférence conçu pour enrouler ledit article en forme de bande (N) le long de ladite première partie (P11) à une vitesse différente de celle de ladite deuxième partie (P12).

6. Appareil (100) selon la revendication précédente, dans lequel ladite tête d'enroulement (10) est déplacée dans une direction concordante avec ladite direction d'alimentation (f) dans ladite première partie (P11) et dans une direction discordante avec ladite direction d'alimentation (f) dans ladite deuxième partie (P12), ladite tête d'enroulement (10) étant de préférence conçue pour enrouler ledit article en forme de bande (N) à une vitesse plus élevée lorsqu'une tête d'enroulement (10) respective est déplacée dans une direction discordante avec ladite direction d'alimentation (f).

7. Appareil (100) selon la revendication précédente, dans lequel ledit segment opérationnel (P1) comprend une troisième partie (P13), de préférence sensiblement parallèle auxdites première et deuxième parties (P11, P12), dans lequel ladite tête d'enroulement (10) est à nouveau déplacée dans une direction concordante avec ladite direction d'alimentation (f) le long de ladite troisième partie (P13).

8. Appareil (100) selon l'une quelconque des revendications précédentes, dans lequel ladite bobine (B) est pour une cellule électrochimique destinée à la production de batteries et dans lequel ledit au moins un article en forme de bande (N) comprend des bandes conductrices (N1, N3) et des bandes séparatrices (N2, N4).

9. Procédé (100) de fabrication d'une bobine (B), ladite bobine (B) étant fabriquée par enroulement d'au moins un article en forme de bande (N), ledit procédé (100) comprenant :
- fournir une pluralité de têtes d'enroulement (10) mobiles le long d'un chemin de travail (P),
- déplacer ledit article en forme de bande (N) dans une direction d'alimentation (f) de manière à acheminer ledit article en forme de bande (N) vers l'une desdites têtes d'enroulement (10) ;
- saisir, à l'aide d'un dispositif de préhension (11) de ladite tête d'enroulement (10), une partie dudit article en forme de bande (N) ; et **caractérisé en ce qu'**il comprend en outre
- déplacer ladite tête d'enroulement (10), alors qu'elle saisit ladite partie de l'article en forme de bande (N), dans une direction discordante avec ladite direction d'alimentation (f), le long d'un segment opérationnel (P1) dudit chemin de travail (P).

10. Procédé selon la revendication précédente, comprenant l'enroulement dudit article en forme de bande (N) par ladite tête d'enroulement (10), ladite tête d'enroulement (10) étant déplacée le long dudit segment opérationnel (P1) dudit chemin de travail (P).

11. Procédé selon la revendication 9 ou 10, dans lequel ledit article en forme de bande (N) est acheminé à travers une section de sortie (22), ladite section de sortie (22) étant mobile, de préférence vers l'avant et vers l'arrière, le long d'une direction de déplacement (d), ladite direction de déplacement (d) étant de préférence parallèle à ladite direction d'alimentation.

12. Procédé selon l'une quelconque des revendications 9 ou 11, comprenant le déplacement desdites têtes d'enroulement (10) le long d'une première et d'une deuxième parties (P11, P12) sensiblement parallèles l'une à l'autre, chaque tête d'enroulement (10) étant déplacée dans une première direction le long de ladite première partie (P11) et dans une direction opposée à ladite direction, dans ladite deuxième partie (P12), dans lequel chaque dispositif de préhension est conçu pour enrouler ledit article en forme de bande (N) le long de ladite première partie (P11) à une vitesse différente de celle de ladite deuxième partie (P12).

13. Procédé selon la revendication précédente, dans lequel ladite tête d'enroulement (10) est déplacée dans une direction concordante avec ladite direction d'alimentation (f) dans ladite première partie (P11) et dans une direction discordante avec ladite direction d'alimentation (f) dans ladite deuxième partie (P12), ledit article en forme de bande (N) étant enroulé à une vitesse plus élevée lorsqu'une tête d'enroulement (10) respective se déplace le long de ladite deuxième partie (P12).

14. Procédé selon la revendication précédente, comprenant le déplacement desdites têtes d'enroulement (10) le long d'une troisième partie (P13), de préférence sensiblement parallèle auxdites première et deuxième parties (P11, P12), ladite tête d'enroulement (10) étant de préférence déplacée dans une direction concordante avec ladite direction d'alimentation (f) le long de ladite troisième partie.

15. Procédé selon l'une quelconque des revendications 9 à 14, dans lequel ladite bobine (B) est destinée à une cellule électrochimique destinée à la production de batteries.
